# EUROPÄISCHE PATENTSCHRIFT

(11) **EP 0 728 768 B1**
(45) Veröffentlichungstag und Bekanntmachung des Hinweises auf die Patenterteilung: **28.08.2002**
(21) Anmeldenummer: 96810093.3
(22) Anmeldetag: 16.02.1996
(51) Int. Cl.: C08F 8/40, C08F 8/44

(54) **An Seitenketten von Polymeren gebundene Diphosphine und deren Metall-Komplexe**
Phosphine groups linked to polymer side chains and their metal complexes
Polymères renfermant des groupements diphosphines dans les chaînes latérales et leurs complexes métalliques

(30) Priorität: 24.02.1995 CH 54295
(43) Veröffentlichungstag der Anmeldung: 28.08.1996
(73) Patentinhaber: Syngenta Participations AG, 4058 Basel (CH); Novartis-Erfindungen Verwaltungsgesellschaft m.b.H., 1235 Wien (AT)
(72) Erfinder: Pugin, Benoît, 4142 Münchenstein (CH)
(74) Vertreter: Dannappel, Hans-Jochen, Dr.

(56) Entgegenhaltungen:
- EP-A- 0 040 891
- EP-A- 0 256 982
- EP-A- 0 329 043
- EP-A- 0 556 688
- DE-A- 2 022 710
- DE-A- 2 536 162
- FR-A- 2 019 198
- FR-A- 2 019 509
- FR-A- 2 030 134

## Beschreibung

Die Erfindung betrifft Diphosphine, die an Seitenketten von Polymeren gebunden sind, deren Metallkomplexe mit Rhodium oder Iridium sowie die Verwendung dieser Komplexe zur Hydrierung von Doppelbindungen und Dreifachbindungen in organischen Verbindungen, insbesondere für die enantioselektive Hydrierung prochiraler organischer Verbindungen unter Verwendung von entsprechenden immobilisierten chiralen Diphosphinen.

In der EP-A-0 256 982 wird die enantioselektive Hydrierung von Ketiminen zu optisch aktiven sekundären Aminen mit Hilfe von chiralen Dioxolan-Iridiumdiphosphinkomplexen als homogenen Katalysatoren beschrieben. Die teuren Katalysatoren können jedoch nicht oder nur mit aufwendigen Trennmethoden zurückgewonnen werden, was stets mit unerwünschten Verlusten verbunden ist Darüber hinaus erleiden diese Katalysatoren oft im Verlaufe der ersten Reaktion einen hohen Aktivitätsverlust, so dass eine Wiederverwendung nicht möglich ist. Es besteht daher ein Bedarf an leicht abtrennbaren und wiederverwendbaren Katalysatoren, deren Aktivität und besonders deren Selektivität bei wiederholtem Gebrauch weitgehend erhalten bleiben.

In der EP-A-0-496 699 und der EP-A-0 496 700 werden Silangruppen enthaltende Dioxolan- und Pyrrolidin-Diphosphine sowie deren Rhodium-oder Iridium-Komplexe vorgeschlagen, die an ein anorganisches Trägermaterial wie zum Beispiel Silikate fixiert werden. Man erhält auf diese Weise bei der Hydrierung eine heterogene Reaktionslösung, aus der sich nach beendeter Reaktion der anorganisch fixierte Katalysator leicht abtrennen lässt. Dieses Verfahren vermag aus folgenden Gründen nicht voll zu befriedigen: a) die Hydrierreaktion verläuft in jedem Fall heterogen und b) grössere Mengen Trägermaterial müssen eingesetzt werden, da die anorganischen Trägermaterialien nur mit geringen Mengen der katalytisch wirksamen Verbindungen belegt werden können.

Andererseits sind auch polymere Trägermaterialien bekannt geworden, bei denen sich die Diphosphinkomponente an einem copolymerisierbaren Baustein befindet, der dann zusammen mit anderen Monomeren copolymerisiert wird, so dass das Diphosphin oder sein Metallkomplex direkt in der Polymerkette gebunden sind.
K. Achiwa beschreibt im J. Chem. Japan. Soc., Chemistry Letters, Seiten 905 bis 908 (1978) Polystyrolcopolymere, deren Benzolreste mit Rhodium komplexierte Pyrrolidin-diphosphin-N-carbonylgruppen enthalten. Die Synthese der Monomeren ist schwierig und die Hydrierung von prochiralen Olefinen mit diesen heterogenen Katalysatoren ist, verglichen mit nicht polymer gebundenen Katalysatoren, mit einer Erniedrigung der Aktivität und der Enantioselektivität verbunden. Die Pyrrolidin-Diphosphin Liganden sind über eine para-Amid Bindung direkt am Benzolrest des Styrols fixiert, das den einen Teil des Copolymerisats bildet, während der andere Teil des Copolymergerüsts durch Hydroxyethylmethacrylat gebildet wird. Durch diese direkte Bindung an das Polymergrundgerüst ist die Beweglichkeit des Diphosphin-Liganden stark eingeschränkt.

Ein weiterer Nachteil dieses Fixierungskonzepts besteht darin, dass das Polymer neu aufgebaut werden muss, was aufwendig ist und zu nicht exakt vorhersehbaren Eigenschaften bezüglich Löslichkeit in organischen Lösungsmitteln, Abtrennbarkeit oder Fällbarkeit nach der Hydrierreaktion führt. Ein derartiger Polymeraufbau begünstigt die teilweise Inklusion des katalytisch aktiven Teils und führt somit zu einer reduzierten Aktivität und Produktivität.

Im Hinblick auf diese Nachteile erscheint es wünschenswert, von Polymeren mit bekannten Eigenschaften auszugehen und diese so mit katalytisch aktiven Verbindungen zu modifizieren, dass die Polymereigenschaften nur geringfügig verändert werden und keine Inklusionen oder anderweitige Veränderungen am katalytisch aktiven Teil der Verbindungen auftreten.

Trotzdem wird das vorstehend dargestellte Prinzip der Fixierung durch Copolymerisation katalytisch aktiver Bausteine der nachträglichen Modifizierung eines bestehenden Polymers vorgezogen. So beschreibt K. J. Stille in J. Macromol. Sci.-Chem. A21 (13 & 14), 1984, 1689-1693, dass auf dem Weg der nachträglichen Modifizierung von z. B. Polystyrol Perlen eine Vielzahl ungeeigneter Katalysatoren erhalten worden sind, die schlechte Gesamtausbeuten in der Hydrierung und schlechte Enantioselektivitäten aufweisen.

In der EP-A-0 329 043 wird ein wasserlöslicher Rhodium-Katalysator hergestellt, indem oligomere- oder niedermolekulare polymere Polyethlenoxide, deren Strukturelementwiederholung zwischen 5 und 1000 liegt, an 3,4-Bis (diarylphoshino)-pyrrolidin gebunden werden. Dazu werden die Endhydroxylgruppen mit einer lsocyanatgruppe eines aliphatischen oder aromatischen Diisocyanats umgesetzt und die noch freie lsocyanatgruppe mit 3,4-Bis (diarylphoshino)-pyrrolidin verbunden. Durch Komplexbildung mit Rh werden wasserlösliche Katalysatoren für die asymmetrische Hydrierung von Olefinen erhalten. Da jeweils nur die Endgruppen der oligomeren oder polymeren Ethylenoxide mit OH Gruppen funktionalisiert sind, kann nur wenig Diphosphinligand pro Polymereinheit gebunden werden oder es müssen oligomere Einheiten mit sehr niedrigem Molekulargewicht vorliegen, die dann aber aus dem Reaktionsgemisch nicht mehr leicht abtrennbar sind.

Es wurde nun überraschend gefunden, dass sich sehr aktive polymergebundene Katalysatoren von Diphosphinen und deren Metallkomplexe herstellen lassen, wenn man von hydroxyl-, primär- oder sekundäraminfunktionelle Gruppen enthaltenden polymeren Grundgerüsten ausgeht, deren funktionelle Gruppen teilweise oder vollständig mit einem von der Polymerkette Abstand gebenden Diisocyanat unter Bildung einer Urethan-oder Harnstoffbrücke verbunden sind, und dessen zweite Isocyanat- Gruppe an ein ebenfalls eine Hydroxyl-, primäre oder sekundäre Amin- Gruppe enthaltendes aliphatisches, cycloaliphatisches, heterocycloliphatisches, aromatisches oder heteroaromatisches 1,2-, 1,3-, 1,4- oder 1,5-Diphosphin gebunden ist. Durch die Wahl der Art und Länge des Diisocyanats kann die Beweglichkeit und Zugänglichkeit des Liganden eingestellt werden. Insbesondere so gebundene Dioxolan-Diphosphine oder Pyrrolidin-Diphosphine führen zu wertvollen Katalysatoren für Hydrierungen insbesondere für enantioselektive Hydrierungen.

Die Herstellung dieser polymergebundenen Diphosphine ist besonders einfach und geht von Polymeren mit bekannten Eigenschaften aus, die beispielsweise in einem ersten Schritt mit einem Diisocyanat umgesetzt werden.
In einem zweiten Schritt können die verbliebenen Isocyanatgruppen mit Hydroxyl-, primären oder sekundären Amingruppen enthaltendem Diphosphin umgesetzt werden. Wird dieser zweite Schritt nur teilweise durchgeführt, so kann der restliche lsocyanatanteil durch Umsetzung mit einem Polyalkylenglykol, einem Diol oder einem Diamin für eine nachträgliche Vernetzung verwendet werden.
Auch eine weitere Polymermodifikation ist möglich, indem die restlichen Isocyanatgruppen beispielsweise mit einem einseitg veretherten Alkylenglykol oder Polyalkylenglykol, einem Alkohol oder Amin weiter umgesetzt werden. Dadurch lassen sich sogar nachträglich nach der Einführung der Diphosphingruppe die Polymereigenschaften nochmals gezielt modifizieren. Man erhält auf diese Weise erheblich mehr Möglichkkeiten zur Anpassung der Katalysatoren an das Reaktionsmedium als mit bekannten Verfahren, was insbesondere grosstechnisch bedeutende Vorteile bietet. Die beiden Verfahrensvarianten lassen sich auch kombinieren.

Die daraus hergestellten Metallkomplexe von Rhodium oder Iridium weisen hohe Selektivität bei asymetrischen Hydrierungen auf, ihre Katalysatoraktivität ist erheblich höher als bei bisher bekannten auf Polymeren immobilisierten Katalysatoren.
Die zu katalysierende Reaktion lässt sich durch die Wahl des Polymeren heterogen oder homogen führen. Das Polymer kann so gewählt und noch nachträglich modifiziert werden, dass sich der Katalysator nach der Reaktion leicht abtrennen und wiederverwenden lässt. Die Katalysatoren können mehrmals wiedereingesetzt werden, eventuelle Aktivitätsverluste können durch Zugabe geringer Mengen frischen Katalysators kompensiert werden. Durch die Wahl des Polymeren lässt sich der Katalysator optimal an das Reaktionsmedium während des Hydrierungsschritts anpassen und danach vollständig abtrennen, was insbesondere für grosstechnisch durchgeführte Hydrierungen von Bedeutung ist. Ferner wird die Rückgewinnung der enthaltenen Edelmetalle erleichtert, wenn der Katalysator nach häufiger Rezyklierung gewechselt werden muss. Die Reinigung des hydrierten Endproduktes wird dadurch ebenfalls erheblich erleichtert.

Ein Gegenstand der Erfindung sind Polymere mit wiederkehrenden Strukturelementen mindestens eines Monomeren MM, welches direkt oder in einer Seitenkette eine Hydroxylgruppe oder eine Primär- oder Sekundär- Amingruppe als funktionelle Gruppe gebunden enthält, dadurch gekennzeichnet, dass die funktionelle Gruppe über eine von einem Diisocyanat gebildete Brückengruppe Q an die Hydroxylgruppe oder Primär- oder Sekundäramingruppe eines aliphatischen, cycloaliphatischen, heterocycloaliphatischen, aromatischen oder heteroaromatischen ditertiären Diphosphins gebunden ist, dessen Phosphingruppen in 1,2-, 1,3-, 1,4- oder 1,5-Stellung zueinander mit einer Kohlenstoffkette verbunden sind.

Die Wahl des Diisocyanats ist an sich unkritisch. Insbesondere kann die Brückengruppe Q durch wenigstens 3 C-Atome gebildet werden. Geeignete und grosstechnisch verfügbare Diisocyanate sind beispielsweise in Houben Weyl, Makromolekulare Stoffe, Band E 20, Seiten 1587 bis 1593 Ausgabe 1987 beschrieben.

Bevorzugt sind Diisocyanate, deren Brückengruppe Q durch ein lineares oder verzweigtes unsubstituiertes oder ein oder mehrfach mit C₁-C₆ -Alkyl, C₁-C₆ -Alkoxy substituiertes aliphatisches C₂-C₂₀ -Alkyl, unsubstituiertes oder mit C₁-C₆ -Alkyl, C₁-C₆ -Alkoxy ein oder mehrfach substituiertes C₃-C₈ -Cycloalkyl oder Heterocycloalkyl, mit unsubstituiertem oder mit C₁-C₆-Alkyl, C₁-C₆ -Alkoxy substituiertem C₃-C₈ Cycloalkyl oder Heterocycloalkyl unterbrochenes lineares oder verzweigtes unsubstituiertes oder mit C₁-C₆ -Alkyl, C₁-C₆-Alkoxy substituiertes aliphatisches C₂-C₂₀ -Alkyl, unsubstituiertes oder mit C₁-C₆ -Alkyl, C₁-C₆-Alkoxy ein oder mehrfach substituiertes Phenyl, Naphthyl, Biphenyl oder C₃-C₁₀ Heteroaryl, durch Phenyl, Naphthyl oder C₃-C₁₀ Heteroaryl unterbrochenes lineares oder verzweigtes unsubstituiertes oder mit C₁-C₆ -Alkyl, C₁-C₆ -Alkoxy substituiertes aliphatisches C₂-C₂₀ -Alkyl gebildet wird.

Die linearen oder verzweigten C₁-C₂₀-Alkylreste sind zum Beispiel Methyl, Ethyl sowie die verschiedenen Stellungsisomeren von Propyl, Butyl, Pentyl, Hexyl, Heptyl, Octyl, Nonyl, Decyl, Undecyl, Dodecyl, Tridecyl, Tetradecyl, Pentadecyl oder Hexadecyl, Heptadecyl, Octadecyl, Nonadecyl oder Eicosyl.

Die C₁-C₆-Alkoxyreste können linear oder verzweigt sein und bedeuten zum Beispiel, Methoxy, Ethoxy sowie die verschiedenen Stellungsisomeren von Propoxy, Butoxy, Pentoxy oder Hexoxy.

Heterocycloalkyl bedeutet z. B. Pyrrolidin, Piperidin, Morpholin, Oxazolidin, Dioxolan, oder eine Isocyanursäuretriestergruppe.

C₃-C₈-Cycloalkyl steht beispielsweise für Cyclopropyl, Dimethylcyclopropyl, Cyclobutyl, Cyclopentyl, Methylcyclopentyl, Cyclohexyl, Cycloheptyl oder Cyclooctyl.

Aromatisch bedeutet zum Beispiel Phenyl, Naphthyl oder Anthracenyl.

Heteroaromatisch bedeutet beispielsweise Pyridin, Pyrimidin, Pyrrol, Furan, Imidazol, Pyrazol oder Triazin.

Besonders bevorzugte Diisocyanate sind 1,6-Bis-[isocyanat]-hexan, 5-Isocyanat-3-(isocyanatmethyl)-1,1,3-trimethylcyclohexan, 1,3-Bis-[5-isocyanat-1,3,3-trimethyl-phenyl]-2,4-dioxo-1,3-diazetidin, 3,6-Bis-[9-isocyanat-nonyl]-4,5-di-(1-heptenyl)-cyclohexen, Bis-[4-isocyanat-cyclohexyl]-methan, trans-1,4-Bis-[isocyanat]-cyclohexan, 1,3-Bis-[isocyanatmethyl]-benzol, 1,3-Bis-[1-isocyanat-1-methyl-ethyl]-benzol, 1,4-Bis-[2-isocyanatethyl]-cyclohexan, 1,3-Bis-[isocyanatmethyl]-cyclohexan, 1,4-Bis-[1-isocyanat-1-methylethyl]-benzol, Bis-[isocyanat]-isododecylbenzol,1,4-Bis-[isocyanat]-benzol, 2,4-Bis-[isocyanat]-toluol, 2,6-Bis-[isocyanat]-toluol, 2,4-/2,6-Bis-[isocyanat]-toluol, 2-Ethyl-1,2,3-tris-[3-isocyanat-4-methyl-anilinocarbonyloxy]-propan, N,N'-Bis-[3-isocyanat-4-methylphenyl]-harnstoff, 1,4-Bis-[3-isocyanat-4-methylphenyl]-2,4-dioxo-1,3-diazetidin, 1,3,5-Tris-[3-isocyanat-4-methylphenyl]-2,4,6-trioxohexahydro-1,3,5-triazin, 1,3-Bis-[3-isocyanat-4-methylphenyl]-2,4,5-trioxoimidazolidin, Bis-[2-isocyanatphenyl]-methan, (2-lsocyanat-phenyl)-(4-isocyanat-phenyl)-methan, Bis-[4-isocyanat-phenyl]-methan, 2,4-Bis-[4-isocyanatbenzyl]-1-isocyanatbenzol, [4-Isocyanat-3-(4-isocyanat-benzyl)-phenyl]-[2-isocyanat-5-(4-isocyanat-benzyl)-phenyl] methan, Tris-[4-isocyanat-phenyl]-methan, 1,5-Bis-[isocyanat]-naphthalin, oder 4,4'-Bis[isocyanat)-3,3'-dimethyl-biphenyl.

Ganz besonders bevorzugte Diisocyanate sind 1,6-Bis-[isocyanat]-hexan, 5-Isocyanat-3-(isocyanatmethyl)-1,1,3-trimethylcyclohexan, 2,4-Bis-[isocyanat]-toluol, 2,6-Bis-[isocyanat]-toluol, 2,4-/2,6-Bis-[isocyanat]-toluol oder Bis-[4-isocyanat-phenyl]-methan.

Hydroxyl- und aminfunktionalisierte Diphosphine, die mit Übergangsmetallen Komplexe bilden und für katalytische Hydrierungen insbesondere für die enantioselektive katalytische Hydrierung eingesetzt werden können, sind bekannt oder nach analogen Verfahren herstellbar. Beispiele sind im Handbook of Enantioselective Catalysis, Vol 2, Ed. H. Brunner, W. Zettlmeier, VCH Verlag Weinheim 1993 beschrieben

Bevorzugt sind Polymere, worin die 1,2-, 1,3-, 1,4- oder 1,5- ständigen tertiären Phosphingruppen an einen aliphatischen Rest mit insgesamt 4 bis 12 C-Atomen, einen cycloaliphatischen Rest mit 3 bis 8 C-Atomen, einen heterocycloaliphatischen Rest mit 2-6 C-Atomen im Heterocyclus, einen aromatischen Rest mit 6 bis 20 C-Atomen oder einen heteroaromatischen Rest mit 2 bis 12 C-Atomen im Heterocyclus gebunden sind

Bei den aliphatischen Diphosphinen kann es sich um an C₄-C₁₂-Alkyl gebundene Phosphinreste handeln, deren Alkylgerüst eine direkt oder in einer Seitenkette gebundene Hydroxyl oder Amingruppe enthält.

Die cycloaliphatischen Diphosphine können sich von Cyclopropyl, Cyclopentyl oder Cyclohexyl ableiten. Es können aber auch bicyclische Brücken sein wie zum Beispiel Bicycloheptan oder Bicyclooctan, die direkt gebunden eine Hydroxyl oder Amingruppe enthalten können.

Heterocyclische Diphosphine können zum Beispiel Derivate von Dioxolan, Pyrrolidin oder Piperidin sein.

Aromatische Diphosphine können sich beispielsweise von Phenyl, Biphenyl, Naphthyl, oder Binaphthyl ableiten.

Geeignete Diphosphine sind beispielsweise solche der Formel 100, 101, 102, 103, 104, 105, 106, 107, 108, 109 und 110.

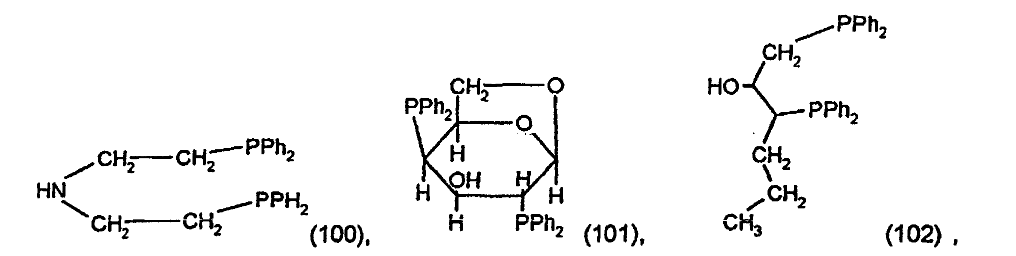

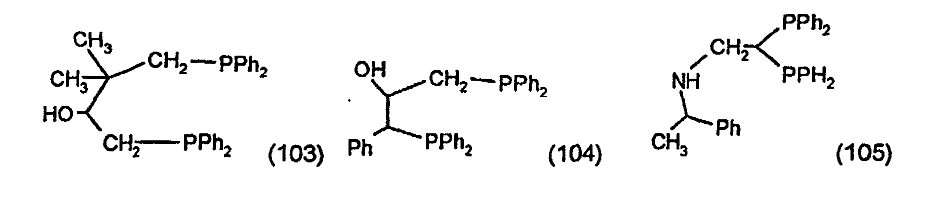

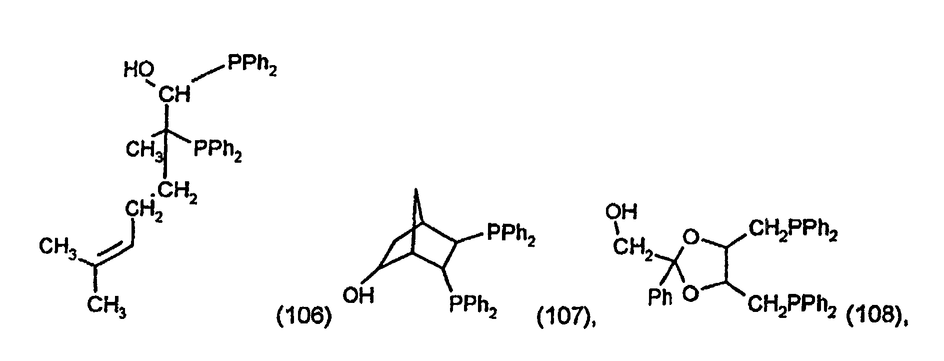

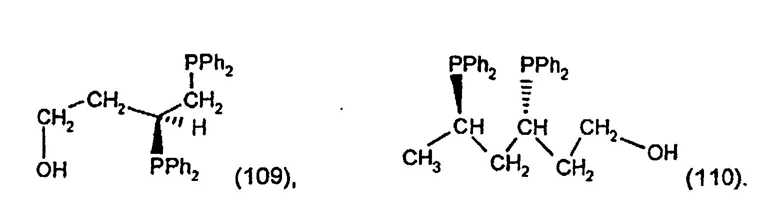

Die Diphosphine der Formel 100 bis 107 sind bekannt und in Handbook of Enantioselective Catalysis, Vol 2, Ed. H. Brunner, W. Zettlmeier, VCH Verlag Weinheim 1993 beschrieben. Die Verbindung der Formel 108 ist ebenfalls bekannt und von A. Borner et al., Tetrahedron Lett. 35, 1994, 6071 beschrieben, die Verbindung der Formel 109 ist bekannt und in Tetrahedron 1994, 50(35), 10419-30 beschrieben, die Verbindung der Formel 110 lässt sich hierzu in analoger Weise herstellen.

Die folgenden primären aminfunktionellen Verbindungen der Formel la sind ebenfalls bekannt und ihre Herstellung in der EP-A-496 700 beschrieben. Mit bekannten Alkylierungsverfahren lassen sich daraus auf einfache Weise die sekundären Amine erhalten.

Die Verbindungen der Formel lb sind aus der EP-A-496 699 ebenfalls bekannt und ihre Herstellung ist dort beschrieben.

Eine bevorzugte Gruppe von Polymeren leitet sich von Diphosphinen der Formel la oder Ib ab, 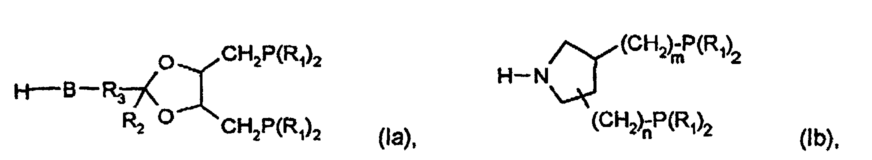 worin
die R₁ gleiche oder verschiedene Reste darstellen und unabhängig voneinander C₁-C₁₂-Alkyl, C₅-C₁₂-Cycloalkyl, Phenyl, mit C₁-C₄-Alkyl oder C₁-C₄-Alkoxy substituiertes C₅-C₁₂-Cycloalkyl oder mit ein bis drei C₁-C₄-Alkyl, C₁-C₄-Alkoxy, C₁-C₄-Halogenalkyl, -SiR₄R₅R₆, Halogen, -SO₃M, -CO₂M, -PO₃M, -NR₇R₈ oder -[⁺NR₇R₈R₉]X⁻ substituiertes Phenyl darstellen;
oder beide R₁ einer Gruppe (R₁)₂P zusammen für o,o' -Diphenylen stehen;
R₂ Wasserstoff, lineares oder verzweigtes C₁-C₁₂-Alkyl, Phenyl oder Benzyl darstellt;
R₃ C₁-C₁₂-Alkylen bedeutet;
die Gruppen (R₁)₂P(CH₂)_{m bzw. n} in o- oder m-Stellung zueinander stehen;
B für -NR₁₀- oder -O-steht;
R₄, R₅ und R₆ unabhängig voneinander für C₁-C₁₂-Alkyl oder Phenyl stehen;
R₇ und R₈ H, C₁-C₁₂-Alkyl, Phenyl oder
R₇ und R₈ zusammen Tetramethylen, Pentamethylen oder 3-Oxa-1,5-Pentylen darstellen;
R₉ H oder C₁-C₄-Alkyl bedeutet,
M für H oder ein Alkalimetall steht, X⁻ das Anion einer einbasischen Säure ist und;
R₁₀ Wasserstoff, lineares oder verzweigtes C₁-C₆-Alkyl ist
und m und n unabhängig voneinander 0 oder 1 bedeuten.

Die R₁ in der Bedeutung von Alkyl können linear oder verzweigt sein und sie enthalten bevorzugt 1 bis 8 und besonders bevorzugt 1 bis 4 C-Atome. Beispiele für dieses Alkyl sind Methyl, Ethyl, n- und i-Propyl, n-, i- und t-Butyl, Pentyl, Hexyl, Heptyl, Octyl, Nonyl, Decyl, Undecyl und Dodecyl. Bevorzugt sind Methyl, Ethyl, n- und i-Propyl, n-, i- und t-Butyl.

Die R₁ in der Bedeutung von Cycloalkyl enthalten bevorzugt 5 bis 8, besonders bevorzugt 5 oder 6 Ring-C-Atome. Beispiele für Cycloalkyl sind Cyclopentyl, Cyclohexyl, Cycloheptyl, Cyclooctyl, Cyclodecyl und Cyclododecyl. Bevorzugt sind Cyclopentyl und Cyclohexyl und besonders bevorzugt ist Cyclohexyl.

Das Cycloalkyl kann substituiert sein, zum Beispiel mit 1 bis 3 Alkyl- oder Alkoxy-Substituenten. Beispiele für solche Substituenten sind zuvor angegeben worden. Bevorzugt sind Methyl und Ethyl sowie Methoxy und Ethoxy. Beispiele für substituiertes Cycloalkyl sind Methyl- und Methoxycyclopentyl und -cyclohexyl.

Die R₁ in der Bedeutung von substituiertem Phenyl enthalten bevorzugt 1 oder 2 Substituenten. Sofern das Phenyl 2 oder 3 Substituenten enthält, können diese gleich oder verschieden sein.

Beispiele für die Substituenten Alkyl und Alkoxy sind zuvor angegeben worden; bevorzugte Alkyl- und Alkoxysubstituenten für Phenyl sind Methyl, Ethyl sowie Methoxy und Ethoxy.

Wenn der Phenyl-Substituent Halogen bedeutet, so handelt es sich bevorzugt um -F, -Cl und -Br.

R₄, R₅ und R₆ können lineares oder verzweigtes Alkyl sein, das bevorzugt 1 bis 8 und besonders bevorzugt 1 bis 4 C-Atome enthält. Beispiele für Alkyl sind zuvor angegeben worden. Bevorzugtes Alkyl ist Methyl, Ethyl, n-Propyl, n-Butyl und t-Butyl. Besonders bevorzugt steht der Substituent -SiR₄R₅R₆ für Trimethylsilyl.

Unter den sauren Phenyl-Substituenten -SO₃M, -CO₂M und -PO₃M ist die Gruppe -SO₃M bevorzugt. M steht bevorzugt für H, Li, Na und K.

R₇ und R₈ enthalten als Alkyl bevorzugt 1 bis 6, besonders bevorzugt 1 bis 4 C-Atome. Das Alkyl ist bevorzugt linear. Bevorzugte Beispiele sind Methyl, Ethyl, n-Propyl und n-Butyl. R₉ stellt als Alkyl bevorzugt Methyl.

X⁻ stellt als Anion einer einbasischen Säure bevorzugt Cl⁻, Br⁻ oder das Anion einer Carbonsäure dar, zum Beispiel Formiat, Acetat, Trichloracetat oder Trifluoracetat dar.

Einige bevorzugte Beispiele für substituiertes Phenyl sind 2-Methyl-, 3-Methyl-, 4-Methyl-, 2-oder 4-Ethyl-, 2- oder 4-i-Propyl-, 2- oder 4-t-Butyl-, 2-Methoxy-, 3-Methoxy-, 4-Methoxy-, 2-oder 4-Ethoxy-, 4-Trimethylsilyl-, 2- oder 4-Fluor-, 2,4-Difluor-, 2- oder 4-Chlor-, 2,4-Di chlor-, 2,4-Dimethyl-, 3,5-Dimethyl-, 2-Methoxy-4-methyl-, 3,5-Dimethyl-4-methoxy-, 3,5-Dimethyl-4-(dimethylamino)-, 2- oder 4-Amino-, 2- oder 4-Methylamino-, 2- oder 4- (Dimethylamnio)-, 2- oder 4-SO₃H-, 2- oder 4-SO₃Na-, 2- oder 4-[⁺ NH₃Cl]-, 3,4,5-Trimethylphen-1-yl, 2,4,6-Trimethylphen-1-yl, 4-Trifluormethylphenyl oder 3,5-Di(trifluormethyl).

Eine bevorzugte Untergruppe von Polymeren erhält man wenn die R₁ in Formel la oder Ib gleiche Reste darstellen und Phenyl, Cyclohexyl, t-Butyl, 2- oder 4-Methylphen-1-yl, 2- oder 4-Methoxyphen-1-yl, 2- oder 4-(Dimethylamino)phen-1-yl, 3,5-Dimethyl-4-(dimethylamino)phen-1-yl oder 3,5-Dimethyl-4-methoxyphen-1-yl, 4-Trifluormethylphenyl oder 3,5-Di(trifluormethyl) sind.

Eine andere besonders bevorzugte Untergruppe von Polymeren wird erhalten, wenn die R₁ in Formel la oder Ib Phenyl sind und m+n In Formel Ib 0, 1 oder 2 ist Ganz besonders bevorzugt sind Polymere der Formel lb, worin R₁ Phenyl bedeutet, m für 0 und n für 1 stehen und die Gruppen (R₁)₂P- und (R₁)₂PCH₂- in m-Stellung gebunden sind, oder m und n für 0 stehen und die Gruppen (R₁)₂P- in o-Stellung gebunden sind.

Die Reste der Formel la und lb können als Enantiomerengemische vorliegen. Bevorzugt sind Polymere, die Reste der Formeln Ia oder Ib in Form der optisch aktiven R,R-, S,S-, R,S- oder S,R-Isomeren, bezogen auf die Stellung der Phosphin(methyl)-Gruppen enthalten.

Bei den erfindungsgemässen Polymeren kann es sich um unvernetzte thermoplastische, vernetzte oder strukturvernetzte Polymere handeln.

Die Polymeren können entweder Polymerisate von olefinisch ungesättigten Monomeren sein, wie zum Beispiel Polyolefine, Polyacrylate, Polyisoprene, Polybutadien, Polystyrol, Polyphenylen, Polyvinychlorid, Polyvinylidenchlorid oder Polyallyverbindungen. Es kann sich um Polyadditionsverbindungen handeln wie zum Beispiel Polyurethane oder Polyether. Als polykondensierte Produkte sind Polyester oder Polyamide zu nennen.

Wenn die Polymeren im wesentlichen unvernetzt sind (Thermoplaste), kann es sich um in organischen Lösungsmitteln lösliche Polymere handeln. Teilvemetzte Polymere sind in organischen Lösungsmitteln meistens nur quellbar und bei hochvernetzten Polymeren kann es sich um unlösliche und vorteilhaft poröse Materialien handeln.

Vemetzte Polymere (Duroplaste) können Phenol-Aldehydharze zum Beispiel in Form von Bakeliten, Harnstoff- oder Melamin- Formaldehydharze, um vernetzte Polyurethanharze oder vernetzte Epoxidharze sein.
Als Vernetzungskomponente für Epoxidharze eigenen sich insbesondere Di- oder Triamine. Möglich sind auch vemetzte Polymere auf Basis Triglycidylisocyanurat.

Es kommen auch zum Beispiel ungesättigte Polyesterharze, die sich von Copolyestern gesättigter und ungesättigter Dicarbonsäuren mit mehrwertigen Alkoholen, sowie Vinylverbindungen als Vernetzungsmittel ableiten in Frage.

Ebenso möglich sind vernetzbare Acrylharze, die sich von substituierten Acrylsäureestern ableiten, wie z.B. von Epoxyacrylaten, Urethanacrylaten oder Polyesteracrylaten.

Eine weitere Gruppe bilden Alkydharze, Polyesterharze und Acrylatharze, die mit Melaminharzen, Harnstoffharzen, Polyisocyanaten oder Epoxidharzen vernetzt sind.

Bei den vernetzten Systemen sind solche aus olefinische ungesättigten Monomeren bevorzugt, Beispiele sind Polyacrylate, Polyolefine oder Polystyrol. Die Vernetzungskomponente ist ebenfalls olefinisch ungesättigt. Ein Beispiel ist mit Divinylbenzol vernetztes Polystyrol.

Beispiele für lineare, in organischen Lösungsmitteln lösliche Polymere sind nachfolgend angegeben.

Die erfindungsgemäss zu verwendenden Polymeren sind an sich bekannt, teilweise käuflich oder sie können mit bekannten Polymerisationsverfahren oder durch nachträgliche Modifikation von Polymeren hergestellt werden.

Bevorzugt ist das hydroxyl-, primär- oder sekundäraminfunktionelle Monomere von 1 bis 100 Molprozent, besonders bevorzugt von 5 bis 100 Molprozent, ganz besonders bevorzugt von 10 bis 100 Molprozent im Polymer enthalten, wenn es sich um lösliche oder quellbare Polymere handelt, bei denen die funktionelle Gruppe bereits vorhanden ist.

Die Beladung des Polymeren über eine Diisocyanatbrückengruppe mit 1,2-,1,3-,1,4- oder 1,5-ständigen tertiären Diphosphingruppen liegt bevorzugt zwischen 5 und 100 Mol-%, besonderes bevorzugt zwischen 5 und 50 Mol-%, bezogen auf die verfügbaren Hydroxyl-, Primär- oder Sekundäramingruppe des Polymeren.

Handelt es sich um vernetzte Polymere, die nachträglich funktionalisiert werden, so sind bevorzugt 1 bis 50 Molprozent, besonders bevorzugt 1 bis 20 Molprozent hydroxyl-, primär-oder sekundäraminfunktionelle Gruppen vorhanden, wobei sich die Molprozentangaben auf das mehrheitlich das Polymere bildende Monomer bezieht.

Bevorzugt werden die das Polymer bildenden Monomeren ausgewählt aus der Gruppe bestehend aus Styrol, p-Methylstyrol oder α-Methylstyrol, von denen mindestens eines eine Hydroxylgruppe oder eine Primär- oder Sekundär- Amingruppe als funktionelle Gruppe gebunden enthält.

Es können weitere Comonomere vorhanden sein, die Copolymere mit Styrolderivaten bilden, wie zum Beispiel Styrol, p-Methylstyrol oder α-Methylstyrol, Butadien, Maleinsäureanhydrid, Acrylate oder Methacrylate sowie Ethylen, Propylen oder Butylen. Es liegen dann Copolymere von z.B. Styrol-Butadien, Styrol-Acrylnitril, Styrol-Alkylmethacrylat, Styrol-Butadien-Atkylacrylat und -methacrylat, Styrol-Maleinsäureanhydrid, Styrol-Acrylnitril-Methylacrylat; Mischungen aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien- Styrol, Styrol-Isopren-Styrol, Styrol-Ethylen/Butylen-Styrol oder Styrol-Ethylen/Propylen-Styrol vor.

Ebenfalls in Frage kommen Pfropfcopolymere von Styrol oder α-Methylstyrol, wie z.B. Styrol auf Polybutadien, Styrol auf Polybutadien-Styrol- oder Polybutadien-Acrylnitril-Copolymeren, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren.

Bevorzugt sind die Comonomeren von Dienen oder Acrylderivaten, wie z.B. Butadien, Acrylnitril, Alkylmethacrylat, Butadien-Alkylacrylat und -Methacrylat, Maleinsäureanhydrid, Acrylnitril-Methylacrylat, die statistische oder Block-Copolymere bilden.

Eine andere bevorzugte Gruppe von Polymeren wird von Monomeren gebildet, die sich von α,β-ungesättigten Säuren, deren Estern oder Amiden, von denen Strukturelemente eine Hydroxyalkylgruppe oder eine Primär- oder Sekundär- Aminoalkylgruppe als funktionelle Gruppe in der Ester oder Amidgruppe gebunden enthalten, ableiten.

Besonders bevorzugt sind die Monomeren aus der Gruppe der Acrylate und deren C₁-C₄-Alkylestern, Methacrylate und deren C₁-C₄-Alkylestern, Acrylamid und Acrylnitril, von denen Strukturelemente eine Hydroxylgruppe oder eine Primär- oder Sekundär- Amingruppe als funktionelle Gruppe gebunden enthalten.

Es können auch weitere Copolymere bildende Comonomere vorhanden sein, die sich von olefinisch ungesättigten Monomeren ableiten, und die statistische Polymere oder Block-Copolymere bilden. Geeignete Comonomere sind Acrylate und deren C₁-C₄-Alkylester, Methacrylate und deren C₁-C₄-Alkylester, Acrylamid und Acrylnitril sowie Butadien, Vinylchlorid oder Vinylfluorid.

Eine weitere Gruppe bevorzugter Polymerer werden von Monomeren gebildet, die Vinylalkohol als Homopolymer oder Vinylalkohol als Copolymer mit Vinylacetat, -stearat,-benzoat, -maleat, Vinylbutyral, Allylphthalat, Allylmelamin enthalten.

Ebenfalls bevorzugte Polymere werden aus Phenol und einem C₁-C₄-Aldehyd gebildet, besonders bevorzugt aus Phenol und Formaldehyd. Die Polymeren sind als noch lösliche Phenol-Formaldehydharze, insbesondere als Novolake bekannt und im Handel erhältlich.

Eine andere bevorzugte Gruppe von Polymeren leitet sich von Bisglycidylethern und Diolen ab. Es handelt sich dabei um hydroxylfunktionelle Polyether, die zum Beispiel aus Bisgylcidylethern und Bisphenol A hergestellt werden.
Die Polyepoxide können aus Diepoxid Comonomeren mit bevorzugt 6 bis 40 und besonders bevorzugt 8 bis 30 C-Atomen, und Diolen als Comonomeren mit bevorzugt 2 bis 200 und besonders bevorzugt 2 bis 50 C-Atomen aufgebaut sein. Eine bevorzugte, davon abgleitete Gruppe wird aus Monomeren gebildet, die ein Polymeres aus cyclischen C₃-C₆-Ethern oder C₂-C₆-Alkylenglykolen mit Bisglycidylethern aufbauen. Die Bislycidylether können aromatisch, aliphatisch oder cycloaliphatisch sein.

Weitere bevorzugte Polymere mit Hydroxylgruppen als funktionellen Gruppen leiten sich von Polysacchariden ab.

Besonders bevorzugt sind partielle Celluloseacetate, -propionate oder-butyrate, partielle Celluloseether, Stärke, Chitin, und Chitosan.

Weitere Polymere leiten sich ab von Polymeren mit reduzierbaren Gruppen wie zum Beispiel Nitril-Gruppen, Keton-Gruppen, Carbonsäureestern und Carbonsäureamiden.

Es können auch im Reaktionsmedium unlösliche Polymere verwendet werden, die durch ein chemisches oder physikalisches Verfahren an der Oberfläche mit Hydroxyl oder Amingruppen funktionalisiert werden. Beispiele für vemetzte, in organischen Lösungsmitteln unlösliche Polymere sind vorstehend angegeben. Beispielsweise können teilweise ungesättigte Polymere durch Oxidation, z. B. mit Wasserstoffperoxid, oberflächlich mit Hydroxylgruppen versehen werden. Eine andere Möglichkeit ist die Plasmabehandlung in zum Beispiel einer Sauerstoffatmosphäre, Stickstoff- oder Ammoniakatmosphäre.
Bevorzugt liegen die Polymeren als Pulver vor. Insbesondere ist unter diesen Trägermaterialien Polystyrol bevorzugt, das nachträglich mit Hydroxyl, Amino oder Hydroxymethyl Gruppen funktionalisiert ist.

Besonders bevorzugt leiten sich die erfindungsgemässen Polymeren von wiederkehrenden Strukturelementen mindestens eines Monomeren MM der Formel IIa, IIb, IIc oder IId ab 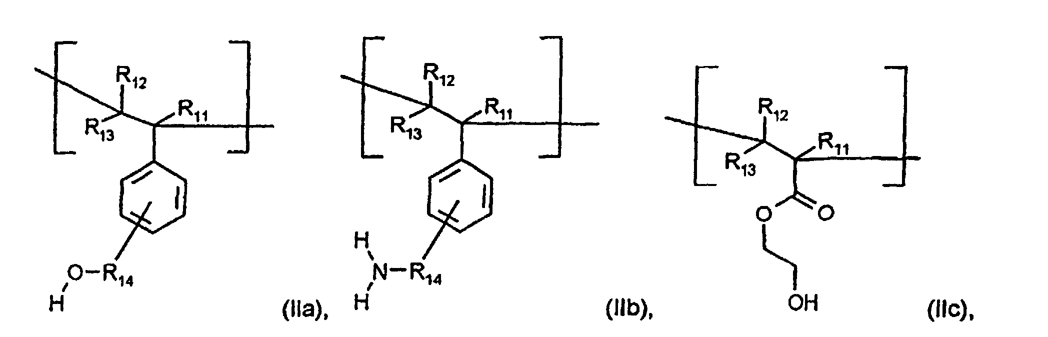 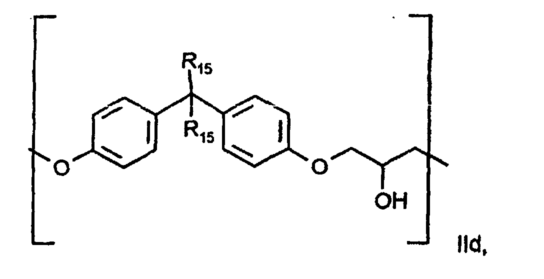 worin R₁₄ C₁-C₄-Alkylen und
R₁₁, R₁₂, R₁₃ und R₁₅ unabhängig voneinander Wasserstoff oder C₁-C₄-Alkyl sind.

Die Polymeren haben bevorzugt ein mittleres Molekulargewicht von 5 000 bis 5 000 000 Dalton, besonders bevorzugt beträgt das Molekulargewicht 10 000 bis 1 000 000 Dalton.

Im Falle von quellbaren Polymeren leiten sich diese bevorzugt von Polystyrol Polymethacrylat oder Polyacrylat ab, welche bevorzugt zwischen 0,5 Molprozent und 5 Molprozent mit einer olefinisch ungesättigten Verbindung vernetzt sind.

Im Falle von hochvernetzten Polymeren handelt es sich bevorzugt um hochvernetztes makroporöses Polystyrol oder Polyacrylat, worin wiederkehrende Struktureinheiten eines Monomeren mit einer Hydroxylgruppe oder einer Primär- oder Sekundär- Amingruppe als funktionelle Gruppe gebunden enthalt sind.
Die Partikelgrösse der hochvernetzten Polymeren beträgt bevorzugt 10 µm bis 2000 µm, besonderes bevorzugt 50 µm bis 500 µm.

Bevorzugt beträgt die spezifische Oberfläche von porösen hochvernetzten Polymeren 5 bis 1000 m²/g, besonders bevorzugt 50-500 m²/g, bestimmt nach der BET-Methode.

Ein weiterer Gegenstand der vorliegenden Erfindung ist ein Verfahren zur Herstellung der erfindungsgemässen in organischen Lösungsmitteln löslichen, quellbaren oder unlöslichen Polymeren, das dadurch gekennzeichnet ist, dass man die Polymeren mit wiederkehrenden Strukturelementen mindestens eines Monomeren MM, welches direkt oder in einer Seitenkette eine Hydroxylgruppe oder eine Primär- oder Sekundär- Amingruppe als funktionelle Gruppe gebunden enthält,
A) in einem ersten Schritt mit einem eine Brückengruppe Q bildenden Diisocyanat in einem inerten organischen Lösungsmittel ganz oder teilweise umsetzt und das Produkt in einem zweiten Schritt mit einem aliphatischen, cycloaliphatischen, heterocycloaliphatischen, aromatischen oder heteroaromatischen ditertiären Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise umsetzt; oder
B) in einem ersten Schritt ein aliphatisches, cycloaliphatisches, heterocycloaliphatisches, aromatisches oder heteroaromatisches ditertiäres Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise mit einem eine Brückengruppe Q bildenden Diisocyanat in einem inerten organischen Lösungsmittel umsetzt und das Produkt in einem zweiten Schritt mit einem Polymeren mit wiederkehrenden Strukturelementen mindestens eines Monomeren MM, welches eine Hydroxylgruppe oder eine Primär- oder Sekundär- Amingruppe als funktionelle Gruppe gebunden enthält, ganz oder teilweise umsetzt; und
C) gegebenenfalls noch freie Isocyanatgruppen mit einem C₂-C₂₄-Diol oder C₂-C₂₄-Diamin vernetzt oder mit einem C₂-C₁₂-Alkohol oder C₂-C₁₂-Amin abreagiert.

Im Reaktionsschritt C) kann auch ein Polyalkylenglykol anstelle eines Diols oder Diamins verwendet werden. Setzt man einseitig verethertes Polyalkylenglykol ein, so lässt sich dadurch der Alkohol oder das Amin ersetzen.

Beispiele für Polyalkylenglykole sind Polyethylenglykol und Polypropylenglykol. Bevorzugt enthalten sie 2 - 1000 Alkyleneinheiten.

Die einseitig veretherten Polyalkylenglykole sind bevorzugt die Methyl-, Ethyl-, Propyl- oder Butyl-Ether.

Für die Brückengruppe Q, die 1,2-, 1,3-, 1,4- oder 1,5- Diphosphine und die durch die Monomeren MM gebildeten Polymeren gelten die vorstehend genannten Definitionen und Bevorzugungen.

Ein bevorzugtes Verfahren zur Herstellung von vernetzten Polymeren wird erhalten, wenn man die Polymeren mit wiederkehrenden Strukturelementen mindestens eines Monomeren MM, welches eine Hydroxylgruppe oder eine Primär- oder Sekundär- Amingruppe als funktionelle Gruppe gebunden enthält
A) in einem ersten Schritt mit einem eine Brückengruppe Q bildenden Diisocyanat in einem inerten organischen Lösungsmittel ganz oder teilweise umsetzt und das Produkt in einem zweiten Schritt mit einem aliphatischen, cycloaliphatischen, heterocycloaliphatischen, aromatischen oder heteroaromatischen ditertiären Diphosphin, dessen Phosphingruppen in 1,2, 1,3, 1,4, oder 1,5- Stellung zueinander mit einer Kohlenstoffkette verbunden sind, und welches eine Hydroxylgruppe oder eine Primär- oder Sekundär- Amingruppe enthält, ganz oder teilweise umsetzt und die restlichen Diisocynatgruppen mit einem aliphatischen C₂-C₂₄-Diol oder C₂-C₂₄-Diamin vernetzt.

Ein anderes bevorzugtes Verfahren zur Herstellung von Polymeren wird erhalten, wenn man die Polymeren mit wiederkehrenden Strukturelementen mindestens eines Monomeren MM, welches eine Hydroxylgruppe oder eine Primär- oder Sekundär- Amingruppe als funktionelle Gruppe gebunden enthält
A) in einem ersten Schritt mit einem eine Brückengruppe Q bildenden Diisocyanat in einem inerten organischen Lösungsmittel ganz oder teilweise umsetzt und das Produkt in einem zweiten Schritt mit einem aliphatischen, cycloaliphatischen, heterocycloaliphatischen, aromatischen oder heteroaromatischen ditertiären Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise umsetzt und die restlichen Diisocynatgruppen mit einem aliphatischen C₂-C₁₂-Alkohol oder C₂-C₁₂-Amin reagieren lässt.

Auf diese Weise lässt sich das Polymer nachträglich noch in seinen Eigenschaften gezielt verändern.

Werden vernetzte Polymere hergestellt, so werden bevorzugt 0,01 bis 10 Molprozent der insgesamt vorhandenen Isocyanatgruppen vernetzt.

Das Verfahren wird bevorzugt in einem polaren oder unpolaren aprotischen Lösungsmittel durchgeführt, besonders bevorzugt ist das Lösungsmittel ein halogenierter Kohlenwasserstoff, ein Ester, ein Keton, ein Säureamid, Ether, Dimethysulfoxid oder eine aromatische Verbindung.
Die Umsetzung der Hydroxylgruppe oder der Primär- oder Sekundär- Amingruppe erfolgt nach bekannten Verfahren. Bevorzugt in einem Temperaturbereich von 10° C bis 100° C.

Die nachträgliche Einführung beispiesweise einer Hydroxy-Gruppe in hochvernetztes Polystyrol kann nach bekannten Verfahren durchgeführt werden. Es wird zunächst wie in J. Mol. Catal. 51 (1989), 13-27 beschrieben chlormethyliert, und anschliessend nach der von J. M. Frechet et al. in Polymer, 20 (1979) 675-680 angegebenen Methode verseift.

Die nachträgliche Modifizierung kann auch in Masse durchgeführt werden, beispielsweise mit Plasmaverfahren. Auch chemische Verfahren in Lösung oder in Emulsion sind möglich.

Unlösliche Polymere werden zuvor nach bekannten Verfahren gemahlen und auf die gewünschte Korngrösse eingestellt.

Ein weiterer Gegenstand der Erfindung sind Metallkomplexe von Rhodium oder Iridium mit polymeren 1,2-, 1,3-, 1,4- oder 1,5-Diphosphinen der Formel IIIa oder IIIb

POL (YMeZ) (IIIa)

POL (YMe)⁺A⁻ (IIIb),

wobei
POL ein erfindungsgemässes polymer gebundenes Diphosphin bedeutet,
Y für zwei Monoolefinliganden oder einen Dienliganden steht;
Z-Cl, -Br, oder -I darstellt;
A⁻ das Anion einer Sauerstoffsäure oder Komplexsäure ist und
Me für Rhodium oder Iridium steht.

Bevorzugt sind Metallkomplexe, bei denen Y für 1,5-Hexadien, 1,5-Cyclooctadien oder Norbornadien steht.

Bevorzugt steht in den erfindungsgemässen Metallkomplexen Z für -Cl, -Br oder I.

In den bevorzugten Metallkomplexen steht A⁻ für ClO₄⁻, CF₃SO₃⁻, CH₃SO₃⁻, HSO₄⁻, BF₄⁻, B(Phenyl)₄⁻, PF₆⁻, SbCl₆⁻, AsF₆⁻ oder SbF₆⁻.

Bevorzugte Metallkomplexe sind solche, bei denen der Diphosphinligand eine Verbindung der Formel la oder Ib ist.

Es gelten die vorstehend angegebenen Bedeutungen und Bevorzugungen der verschiedenen Reste.

Ein weiterer Gegenstand der Erfindung ist ein Verfahren zur Herstellung der erfindungsgemässen Metallkomplexe, das dadurch gekennzeichnet ist, dass man die erfindungsgemässen polymer gebundenen Diphosphine mit einer Metallverbindung der Formel [Me(Y)Z]₂ oder Me(Y)₂⁺ A⁻ umsetzt, worin Me Rhodium oder Iridium bedeutet und Y, Z und A⁻ die vorstehend angegebenen Bedeutungen haben.

Die Umsetzung wird vorteilhaft unter Inertgasatmosphäre, zum Beispiel Argon, und zweckmässig bei Temperaturen von 0 bis 40 °C, bevorzugt bei Raumtemperatur vorgenommen, wenn es sich um lösliche polymer gebundene Diphosphine handelt. Vorteilhaft wird ein Lösungsmittel oder Gemisch von Lösungsmitteln mitverwendet, zum Beispiel Kohlenwasserstoffe (Benzol, Toluol, Xylol), halogenierte Kohlenwasserstoffe (Methylenchlorid, Chloroform, Tetrachlorkohlenstoff, Chlorbenzol), Alkanole (Methanol, Ethanol, Ethylenglykolmonomethylether), und Ether (Diethylether, Dibutylether, Tetrahydrofuran, Ethylenglykoldimethylether) oder Gemische davon.

Bei den erfindungsgemässen polymergebundenen Metallkomplexen kann eine vorberechnete Menge dieser Katalysator-Lösung direkt für eine Hydrierreaktion verwendet werden.

Es ist auch möglich den Katalysator direkt in der Hydrierlösung in situ herzustellen. Im Fall unlöslicher, löslicher, teilweise oder hochvernetzter polymer gebundener Diphosphine löst man zunächst die Metallverbindungen der Formel [Me(Y)Z]₂ oder Me(Y)₂⁺ A⁻ in einem Lösungsmittel und gibt diese Lösung zu dem gelösten oder aufgeschlämten Material. Hierbei können die zuvor beschriebenen Reaktionsbedingungen angewendet werden. Das erfindungsgemässe Polymer kann entweder direkt verwendet werden oder durch Filtration isoliert und durch Waschen mit den zuvor erwähnten Lösungsmitteln gereinigt und im Vakuum getrocknet werden.

Die erfindungsgemässen polymeren Metallkomplexe eignen sich hervorragend als Katalysatoren zur Hydrierung von ungesättigten organischen Verbindungen mit Doppel- oder Dreifachbindungen, insbesondere als homogene, leicht abtrennbare oder heterogene Katalysatoren zur enantioselektiven Hydrierung von Verbindungen mit prochiralen Kohlenstoff- und Kohlenstoff-/Heteroatomdoppelbindungen, zum Beispiel Verbindungen, die eine der Gruppen C=C, C=N, C=O, C=C-N oder C=C-O enthalten ( siehe zum Beispiel K. E. König, The Applicability of Asymmetric Homogeneous Catalysis, in James D. Morrison (ed.), Asymmetric Synthesis, Vol. 5, Academic Press, 1985). Beispiele für solche Verbindungen sind prochirale Alkene, Imine und Ketone. Die erfindungsgemässen Katalysatoren können nach der Reaktion in einfacher Weise, zum Beispiel durch Dekantieren oder Filtration oder bei homogenen Katalysatoren durch Fällung praktisch vollständig vom Reaktionsgemisch abgetrennt und anschliessend mehrmals wiederverwendet werden. Dabei wird gegenüber bekannten polymergebundenen Katalysatoren ein bedeutend geringerer Aktivitätsverlust beobachtet. Dieser kann gewünschtenfalls durch die Zugabe von geringen Mengen frischen Katalysators ausgeglichen werden. Darüber hinaus werden gegenüber homogenen Katalysatoren vergleichbare Selektivitäten (optische Ausbeuten) erzielt.

Ein weiterer Gegenstande der Erfindung ist daher die Verwendung der erfindungsgemässen Metallkomplexe als heterogene oder homogene Katalysatoren zur Hydrierung von ungesättigten organischen Verbindungen, bevorzugt zur asymmetrischen Hydrierung von prochiralen Verbindungen mit Kohlenstoff- oder Kohlenstoff-/Heteroatomdoppelbindungen.

Bevorzugt werden die Metallkomplexen zur Hydrierung von asymmetrischen Kohlenstoffdoppelbindungen, Ketiminen und Ketonen in prochiralen organischen Verbindungen verwendet.

Ein weiterer Gegenstand ist ein Verfahren zur Hydrierung von ungesättigten organischen Verbindungen bevorzugt zur asymmetrischen Hydrierung von prochiralen organischen Verbindungen mit Kohlenstoff- oder Kohlenstoff-Heteroatomdoppelbindungen, dadurch gekennzeichnet, dass man die Verbindungen bei einer Temperatur von -20 bis 80 °C und einem Wasserstoffdruck von 10⁵ bis 2x10⁷ Pa in Gegenwart katalytischer Mengen eines oder mehrerer erfindungsgemässer Komplexe hydriert.

Bevorzugte Verbindungen sind zuvor erwähnt worden. Unsymmetrische Ketimine und Ketone sind bekannt. In Frage kommende N-Arylketimine sind zum Beispiel in der EP-A-0 256 982 beschrieben. N-aliphatische Ketimine sind zum Beispiel in der EP-A-0 301 457 beschrieben. Solche Imine können aus den entsprechenden unsymmetrische Ketonen hergestellt werden, die bekannt und teilweise käuflich oder nach bekannten Verfahren herstellbar sind. Geeignete, gegebenenfalls substituierte Alkene sind in der zuvor erwähnten Publikation von K. E. König beschrieben.

Das Verfahren wird bevorzugt bei einer Temperatur von -20 bis 50 °C und bevorzugt bei einem Wasserstoffdruck von 10⁵ bis 10⁷ Pa durchgeführt.

Die Menge des Katalysators wird bevorzugt so gewählt, dass das Molverhältnis der zu hydrierenden Verbindung zu dem an das Polymer gebundenen aktiven Katalysatorbestandteil 100000 bis 40 beträgt.

Eine bevorzugte Verfahrensdurchführung ist dadurch gekennzeichnet, dass man zusätzlich ein Ammonium- oder Alkalimetallchlorid, -bromid oder -iodid mitverwendet, besonders bei der Verwendung erfindungsgemässer Iridium-Katalysatoren. Die Menge kann beispielsweise 0,1 bis 100, bevorzugt 1 bis 50 und besonders bevorzugt 2 bis 20 Aequivalente betragen, bezogen auf den auf dem Träger fixierten aktiven Katalysatorbestandteil. Der Zusatz von lodiden ist bevorzugt. Ammonium ist bevorzugt Tetraalkylammonium mit 1 bis 6 C-Atomen in den Alkylgruppen, und als Alkalimetall ist Lithium, Natrium und Kalium bevorzugt.

Die Hydrierung kann ohne oder in Gegenwart von Lösungsmitteln durchgeführt werden. Geeignete Lösungsmittel, die alleine oder als Mischung von Lösungsmitteln eingesetzt werden können, sind zum Beispiel: aliphatische und aromatische Kohlenwasserstoffe (Pentan, Hexan, Cyclohexan, Methylcyclohexan, Benzol, Toluol, Xylol), Alkohole (Methanol, Propanol, Butanol, Ethylenglykolmonomethylether), Ether (Diethylether, Diethylenglykoldimethylether, Tetrahydrofuran, Dioxan), Halogenkohlenwasserstoffe (Methylenchlorid, Chloroform, 1,1,2,2-Tetrachlorethan, Chlorbenzol), Carbonsäureester und Lactone (Essigsäureethylester, Butyrolacton, Valerolacton), N-substituierte Säureamide und Lactame (Dimethylformamid, N-Methylpyrrolidin). Vorteilhaft sind Mischungen aus einem aromatischen Kohlenwasserstoff und Alkoholen, zum Beispiel Toluol/Ethanol oder Benzol/Methanol.

Mit dem erfindungsgemässen Hydrierverfahren können optisch reine Verbindungen erhalten werden, die wertvolle Zwischenprodukte zur Herstellung biologisch aktiver Wirkstoffe besonders im Bereich der Pharmazeutika und Agrarchemikalien darstellen. So können zum Beispiel aus sekundären Aminen, besonders N-Carbalkoxymethylaminen, 5-Imidazolcarbonsäurederivate hergestellt werden, die eine herbizide Wirkung haben und zur Bekämpfung von Unkräutern verwendet werden können (EP-A-0 207 563). Die optisch reinen α-Aminocarbonsäureester sind für Peptidsynthesen geeignet.

Die nachfolgenden Beispiel verdeutlichen die Erfindung.

### Verwendete Abkürzungen:

- TDI: Toluylen-2,4-diisocyanat
- HDI: Hexamethylen-1,6-diisocyanat
- PPM: (2S,4S)-(-)-4-Diphenylphosphino-2-(diphenylphosphinomethyl)-pyrrolidin
- DMF: N,N-Dimethylformamid

- PKHH:: Polyphenoxyharz auf der Basis von Bisphenol A. Mittleres Molgewicht ca. 50'000D. Lieferant: Union Carbide.
- HEMA:: Poly-(methacrylsäure-2-hydroxyethylester). Lieferant: Aldrich (Nr. 19,206-6).
- XAD-2:: Makroporöse, hochvernetzte Polystyrol - Kügelchen, 20 - 50 mesh. Lieferant: Rohm & Haas Co.
- PS-CH₂-NH₂:: Aminomethylierte, mit 1% Divinylbenzol vernetzte Polystyrol Kügelchen. Amin-Gehalt: 0.56 mmol / g. Lieferant: Novabiochem AG, CH-4448 Läufelfingen, Schwitzerland.
- PS-PEG-OH:: Polyethylenglykol 600, gebunden an Polystyrol-1%-Divinylbenzol. Lieferant: Fluka (Nr.81185).

Alle nachfolgenden Reaktionen der Beispiele A1 bis A17 wurden unter einer Argon - Atmosphäre und mit absolutierten Lösungsmitteln durchgeführt.

### Beispiele A : Herstellung von immobilisierten Liganden

Beispiele A1-A9: Herstellung, ausgehend von löslichen, nicht vernetzten Polymeren, die in einem ersten Schritt mit einem Diisocyanat umgesetzt werden.

### Beispiel A1

Zu einer Lösung von 145 mg (0,51 mmol OH-Gruppen) Polyphenoxyharz auf der Basis von Bisphenol A-Diglycidylether, (PKHH-Polymer, mittleres Molgewicht ca. 50'000D, Lieferant: Union Carbide) in 7 ml CH₂Cl₂ werden 1,17 ml (8,16 mmol) TDI (Toluylen-2,4-diisocyanat) zugetropft. Nach Zugabe von 8 µl Triethylamin als Katalysator wird die Reaktionslösung während 3,5 Std. bei 45-50°C gerührt. Nach Abkühlen der Lösung auf Raumtemperatur wird das überschüssige TDI entfernt, indem folgender Vorgang 5 mal wiederholt wird: Ausfällen des Polymers mit 50 ml Hexan, Abdekantieren der überstehenden Lösung, wieder Auflösen des Polymers mit 7 ml CH₂Cl₂. Dann werden zum Polymer in 10 ml CH₂Cl₂ 231 mg (0,51 mmol) PPM (2S,4S)-(-)-4-Diphenylphosphino-2-(diphenylphosphinomethyl)-pyrrolidin zugegeben und 20 Std. gerührt. Um noch nicht umgesetzte Isocyanatgruppen umzusetzen, werden anschliessend 5 ml Ethanol und 10 µl Triethylamin (Katalysator) zugetropft, und das Reaktionsgemisch 2,5 Std. unter Rückfluss gerührt. Der polymerfixierte Ligand wird anschliessend gewaschen, indem der folgende Vorgang 6 mal wiederholt wird: Ausfällen mit 100 ml Hexan, Abdekantieren der obenstehenden Lösung, Lösen / Quellen des Rückstandes mit 15 ml CH₂Cl₂. Nach dem letzten Waschvorgang wird der Rückstand am Hochvakuum getrocknet. Es wird ein weisses Pulver erhalten, welches in CH₂Cl₂ weitgehend löslich ist.
Analytik: Mikroanalyse: Phosphorgehalt= 6,25%. Dies entspricht 1,01 mMol Diphosphin-Ligand/g.

### Beispiel A2

Zu einer Lösung von 350 mg (1,23 mmol OH-Gruppen) PKHH-Polymer in 10 ml CH₂Cl₂ werden 2,84 ml (19,8 mmol) TDI zugetropft. Nach Zugabe von 20 µl Triethylamin als Katalysator wird die Reaktionslösung während 3,5 Std. bei 45-50°C gerührt. Nach Abkühlen der Lösung auf Raumtemperatur wird das überschüssige TDI entfernt, indem folgender Vorgang 5 mal wiederholt wird: Ausfällen des Polymers mit 50 ml Hexan, Abdekantieren der überstehenden Lösung, wieder Auflösen des Polymers mit 10 ml CH₂Cl₂. Nach dem letzten Abdekantieren wird das Polymer in 10 ml CH₂Cl₂ gelöst und nach Zugabe von 140 mg (0,31 mmol) PPM wird das Reaktionsgemisch während 20 Std. bei Raumtemperatur gerührt. Die restlichen Isocyanatgruppen werden anschliessend mit Ethanol (5 ml) in Gegenwart von 20 µl Triethylamin durch Rühren bei 50°C (4 Std.) umgesetzt. Der polymerfixierte Ligand wird anschliessend gewaschen, indem der folgende Vorgang 5 mal wiederholt wird: Ausfällen mit 50 ml Hexan / Diethylether (3/2), Abdekantieren der obenstehenden Lösung, Lösen /Quellen des Rückstandes mit 10 ml CH₂Cl₂. Nach dem letzten Waschvorgang wird der Rückstand schliesslich am Hochvakuum getrocknet Es wird ein weisses Pulver erhalten, welches in CH₂Cl₂ weitgehend löslich ist.
Analytik: Mikroanalyse: Phosphorgehalt= 2,35 %. Dies entspricht 0,379 mMol Diphosphin-Ligand/g.

### Beispiel A3

Zu einer Lösung von 375 mg (1,32 mmol OH-Gruppen) PKHH-Polymer in 10 ml CH₂Cl₂ werden 3,04 ml (21,1 mmol) TDI zugetropft. Nach Zugabe von 20 µl Triethylamin als Katalysator wird die Reaktionslösung während 3,5 Std. bei 45-50°C gerührt. Nach Abkühlen der Lösung auf Raumtemperatur wird das überschüssige TDI entfernt, indem folgender Vorgang 5 mal wiederholt wird: Ausfällen des Polymers mit 50 ml Hexan, Abdekantieren der überstehenden Lösung, wieder Auflösen des Polymers mit 10 ml CH₂Cl₂. Nach dem letzten Abdekantieren wird das Polymer in 10 ml CH₂Cl₂ gelöst und nach Zugabe von 150 mg (0,33 mmol) PPM wird das Reaktionsgemisch während 20 Std. bei Raumtemperatur gerührt. Die restlichen Isocyanatgruppen werden anschliessend mit Diethylenglykolmonomethylether (5 ml) in Gegenwart von 20 µl Triethylamin durch Rühren bei 50°C (20 std) umgesetzt. Der polymerfixierte Ligand wird anschliessend gewaschen, indem der folgende Vorgang 5 mal wiederholt wird: Ausfällen mit 100 ml Hexan, Abdekantieren der obenstehenden Lösung, Lösen / Quellen des Rückstandes mit 15 ml CH₂Cl₂. Nach dem letzten Waschvorgang wird der Rückstand schliesslich am Hochvakuum getrocknet. Es wird ein weisses Pulver erhalten, welches in CH₂Cl₂ stark quillt.
Analytik: Mikroanalyse: Phosphorgehalt= 1,53%. Dies entspricht 0,247 mMol Diphosphin-Ligand/g.

### Beispiel A4

Zu einer Lösung von 117 mg (0,9 mmol OH-Gruppen) Poly-methacrylsäure-2-hydroxyethylester, (HEMA-Polymer Lieferant: Aldrich) in 5 ml DMF (N,N-Dimethylformamid) werden 2,06 ml (14,3 mmol) TDI zugetropft. Nach Zugabe von 15 µl Triethylamin als Katalysator wird die Reaktionslösung während 30 min. bei 65°C gerührt. Nach Abkühlen der Lösung auf Raumtemperatur wird das überschüssige TDI entfernt, indem folgender Vorgang 4 mal wiederholt wird: Ausfällen des Polymers mit 25 ml Diethylether /Hexan (3/2), Abdekantieren der überstehenden Lösung, wieder Auflösen des Polymers mit 5 ml DMF. Nach dem letzten Abdekantieren wird das Polymer in 5 ml DMF gequollen und nach Zugabe von 102 mg (0,23 mmol) PPM wird das Reaktionsgemisch während 20 Std. bei Raumtemperatur gerührt. Die restlichen Isocyanatgruppen werden anschliessend mit Ethanol (5 ml) in Gegenwart von 20 µl Triethylamin durch Rühren bei 60°C (22 Std.) umgesetzt. Der polymerfixierte Ligand wird anschliessend gewaschen, indem der folgende Vorgang 5 mal wiederholt wird: Ausfällen mit 50 ml Diethylether, Abdekantieren der obenstehenden Lösung, Lösen / Quellen des Rückstandes mit 10 ml Ethanol. Nach dem letzten Waschvorgang wird der Rückstand schliesslich am Hochvakuum getrocknet. Es wird ein weisses Pulver erhalten.
Analytik: Mikroanalyse: Phosphorgehalt= 2,69 %. Dies entspricht 0,434 mMol Diphosphin-Ligand/g.

### Beispiel A5

Zu einer Lösung von 344 mg (1,21 mmol OH-Gruppen) PKHH-Polymer in 16 ml CH₂Cl₂ werden 2,8 ml (19,4 mmol) TDI zugetropft. Nach Zugabe von 20 µl Triethylamin als Katalysator wird die Reaktionslösung während 4,5 Std. bei 45-50°C gerührt. Nach Abkühlen der Lösung auf Raumtemperatur wird das überschüssige TDI entfernt, indem folgender Vorgang 5 mal wiederholt wird: Ausfällen des Polymers mit 50 ml Hexan, Abdekantieren der überstehenden Lösung, wieder Auflösen des Polymers mit 10 ml CH₂Cl₂. Nach dem letzten Abdekantieren wird das Polymer in 16 ml CH₂Cl₂ gelöst und nach Zugabe von 137 mg (0,3 mmol) PPM wird das Reaktionsgemisch während 20 Std. bei Raumtemperatur gerührt. Durch Zugabe von 0,5 ml Polyethylenglykol (Molgewicht 190 - 210 D) und 5 µl Triethylamin als Katalysator und Rühren bei 50°C (1 Std.) wird das Polymer leicht vernetzt. Die restlichen Isocyanatgruppen werden anschliessend durch Zugabe von Ethanol (8 ml) in Gegenwart von weiteren 5 µl Triethylamin durch Rühren bei 50°C (16 Std.) umgesetzt. Der polymerfixierte Ligand wird anschliessend gewaschen, indem der folgende Vorgang 5 mal wiederholt wird: Ausfällen mit 50 ml Hexan, Abdekantieren der obenstehenden Lösung, Quellen des Rückstandes mit 10 ml CH₂Cl₂. Nach dem letzten Waschvorgang wird der Rückstand schliesslich am Hochvakuum getrocknet. Es wird ein weisses Pulver erhalten, welches in CH₂Cl₂ zu einem Gel quillt.
Analytik: Mikroanalyse: Phosphorgehalt= 1,69 %. Dies entspricht 0,273 mMol Diphosphin-Ligand/g.

### Beispiel A6

Zu einer Lösung von 622 mg (2,2 mmol OH-Gruppen) PKHH-Polymer in 13 ml CHCl₃ werden 1,25 ml (8,8 mmol) TDI zugetropft. Nach Zugabe von 5 µl Triethylamin als Katalysator wird die Reaktionslösung während 100 min. bei 50°C gerührt. Nach Abkühlen der Lösung auf Raumtemperatur wird das überschüssige TDI entfernt, indem folgender Vorgang 2 mal wiederholt wird: Ausfällen des Polymers mit 50 ml Hexan, Abdekantieren der überstehenden Lösung, wieder Auflösen des Polymers mit 15 ml CHCl₃. Nach dem letzten Abdekantieren wird das Polymer in 20 ml CHCl₃ gelöst. Dann werden 250 mg (0,55 mmol) PPM zugegeben, und das Reaktionsgemisch während 20 Std. bei Raumtemperatur gerührt. Nicht umgesetzte Isocyanatgruppen werden anschliessend mit Ethanol (10 ml) in Gegenwart von 5 µl Triethylamin durch Rühren bei 45°C (3 Std.) umgesetzt. Der polymerfixierte Ligand wird anschliessend gewaschen, indem der folgende Vorgang 2 mal wiederholt wird: Ausfällen mit 50 ml Diethylether, Abdekantieren der obenstehenden Lösung, Lösen / Quellen des Rückstandes mit 15 ml CHCl₃. Nach dem letzten Waschvorgang wird der Rückstand schliesslich am Hochvakuum getrocknet. Es wird ein weisses Pulver erhalten, welches in CH₂Cl₂ weitgehend löslich ist.
Analytik: Mikroanalyse: Phosphorgehalt= 2,55 %. Dies entspricht 0,411 mMol Diphosphin-Ligand/g.

### Beispiel A7

Zu einer Lösung von 525 mg (1,8 mmol OH-Gruppen) PKHH-Polymer in 12 ml CHCl₃ werden 1,06 ml (7,4 mmol) TDI zugetropft. Nach Zugabe von 5 µl Triethylamin als Katalysator wird die Reaktionslösung während 60 min. bei 50°C gerührt. Nach Abkühlen der Lösung auf Raumtemperatur wird das überschüssige TDI entfernt, indem folgender Vorgang 2 mal wiederholt wird: Ausfällen des Polymers mit 50 ml Hexan, Abdekantieren der überstehenden Lösung, wieder Auflösen des Polymers mit 15 ml CHCl₃. Nach dem letzten Abdekantieren wird das Polymer in 15 ml CHCl₃ gelöst. Dann werden 203 mg (0,46 mmol) (3R,4R)-3,4-(Bisdiphenylphosphin)pyrrolidin zugegeben, und das Reaktionsgemisch während 6 Std. bei Raumtemperatur gerührt. Nicht umgesetzte Isocyanatgruppen werden anschliessend mit Ethanol (5 ml) in Gegenwart von 5 µl Triethylamin durch Rühren bei 45°C (1 Std.) umgesetzt. Der polymerfixierte Ligand wird anschliessend gewaschen, indem der folgende Vorgang 2 mal wiederholt wird: Ausfällen mit 50 ml Diethylether, Abdekantieren der obenstehenden Lösung, Lösen / Quellen des Rückstandes mit 10 ml CHCl₃. Nach dem letzten Waschvorgang wird der Rückstand schliesslich am Hochvakuum getrocknet. Es wird ein weisses Pulver erhalten, welches in CH₂Cl₂ weitgehend löslich ist
Analytik: Mikroanalyse: Phosphorgehalt= 2,85 %. Dies entspricht 0,46 mMol Diphosphin-Ligand/g.

### Beispiel A8

Zu einer Lösung von 530 mg (1,9 mmol OH-Gruppen) PKHH-Polymer in 12 ml CHCl₃ werden 1,08 ml (7,5 mmol) TDI zugetropft. Nach Zugabe von 5 µl Triethylamin als Katalysator wird die Reaktionslösung während 60 min. bei 50°C gerührt. Nach Abkühlen der Lösung auf Raumtemperatur wird das überschüssige TDI entfernt, indem folgender Vorgang 2 mal wiederholt wird: Ausfällen des Polymers mit 50 ml Hexan, Abdekantieren der überstehenden Lösung, wieder Auflösen des Polymers mit 15 ml CHCl₃. Nach dem letzten Abdekantieren wird das Polymer in 20 ml CHCl₃ gelöst. Dann werden 253 mg (0,47 mmol) (4S,5S)-1-Methyl-1'-(4-aminobutyl)-4,5-bis[(diphenylphosphino)methyl]-1,3-dioxolan zugegeben, und das Reaktionsgemisch während 20 Std. bei Raumtemperatur gerührt. Nicht umgesetzte Isocyanatgruppen werden anschliessend mit Ethanol (5 ml) in Gegenwart von 5 µl Triethylamin durch Rühren bei 45°C (3 Std.) umgesetzt. Der polymerfixierte Ligand wird anschliessend gewaschen, indem der folgende Vorgang 2 mal wiederholt wird: Ausfällen mit 100 ml Diethylether, Abdekantieren der obenstehenden Lösung, Lösen /Quellen des Rückstandes mit 15 ml CHCl₃. Nach dem letzten Waschvorgang wird der Rückstand schliess lich am Hochvakuum getrocknet. Es wird ein weisses Pulver erhalten, welches in CH₂Cl₂ weitgehend löslich ist.
Analytik: Mikroanalyse: Phosphorgehalt= 2,73 %. Dies entspricht 0,404 mMol Diphosphin-Ligand/g.

### Beispiel A9

Zu einer Lösung von 334 mg (1,17 mmol OH-Gruppen) PKHH-Polymer in 10 ml CH₂Cl₂ werden 0,085 ml (0,59 mmol) TDI zugetropft. Nach Zugabe von 10 µl Triethylamin als Katalysator wird die Reaktionslösung während 3,5 Std. bei 45-50°C gerührt. Dabei bildet sich aus dem zuvor löslichen Polymer ein Gel. Nach Abkühlen der Lösung auf Raumtemperatur wird das nicht umgesetzte TDI entfernt, indem folgender Vorgang 5 mal wiederholt wird: Ausfällen des Polymers mit 50 ml Hexan, Abdekantieren der überstehenden Lösung, wieder Quellen des Polymers mit 20 ml CH₂Cl₂. Nach dem letzten Abdekantieren wird das Polymer in 20 ml CH₂Cl₂ aufgeschlämmt. Dann werden 133 mg (0,29 mmol) PPM zugegeben, und das Reaktionsgemisch während 20 Std. bei Raumtemperatur gerührt. Nicht umgesetzte Isocyanatgruppen werden anschliessend durch Zugabe von Ethanol (5 ml) in Gegenwart von 20 µl Triethylamin und Rühren bei 50°C (20 Std.) umgesetzt. Der polymerfixierte Ligand wird anschliessend gewaschen, indem der folgende Vorgang 5 mal wieder holt wird: Ausfällen mit 50 ml Hexan, Abdekantieren der obenstehenden Lösung, Lösen / Quellen des Rückstandes mit 20 ml CH₂Cl₂. Nach dem letzten Waschvorgang wird der Rückstand schliesslich am Hochvakuum getrocknet. Es wird ein weisses Pulver erhalten, welches in CH₂Cl₂ ein Gel bildet.
Analytik: Mikroanalyse: Phosphorgehalt= 2,80 %. Dies entspricht 0,45 mMol Diphosphin-Ligand/g.

Beispiele A10-A13: Herstellung, ausgehend von vernetzten Polymeren, die in einem ersten Schritt mit einem Diisocyanat umgesetzt werden.

### Beispiel A10

Hochvernetztes, makroporöses Polystyrol (XAD-2, Kügelchen, 20-50 mesh. Lieferant: Rohm & Haas Co.) wurde nach der Methode von G. Challa et al. (J. Mol. Catal., 51 (1989) 13-27) chloromethyliert und anschliessend nach der Methode von J.M.J Frechet et al. (Polymer, 20 (1979) 675-680) verseift (O-Gehalt= 1,49 mmol/g). Zu einer Suspension von 600 mg (0,89 mmol OH-Gruppen) dieses hydroxymethylierten XAD-2 in 10 ml CH₂Cl₂ werden 0,72 ml (5 mmol) TDI zugetropft. Nach Zugabe von 5 µl Triethylamin als Katalysator wird die Reaktionslösung während 4 Std. bei 45-50°C gerührt. Nach Abkühlen der Lösung auf Raumtemperatur wird das überschüssige TDI durch 5-maliges Waschen mit CH₂Cl₂ entfernt. Anschliessend wird das Polymer in 10 ml CH₂Cl₂ suspendiert und nach Zugabe von 401 mg (0,88 mmol) PPM wird das Reaktionsgemisch während 20 Std. bei Raumtemperatur gerührt. Die restlichen Isocyanatgruppen werden anschliessend mit Ethanol (5 ml) in Gegenwart von 5 µl Triethylamin durch Rühren bei 40°C (9 Std.) umgesetzt. Der polymerfixierte Ligand wird anschliessend 6 mal mit je 10 ml CH₂Cl₂ gewaschen und schliesslich am Hochvakuum getrocknet. Es wird ein weisses, unlösliches Pulver erhalten.
Analytik: Mikroanalyse: Phosphorgehalt= 1,34 %. Dies entspricht 0,216 mMol Diphosphin-Ligand/g.

### Beispiel A11

1 g PS-CH₂-NH₂ Polymer, (PS-CH₂-NH₂: Aminomethylierte, mit 1% Divinylbenzol vernetzte Polystyrol Kügelchen, Amin-Gehalt: 0,56 mmol/g; Lieferant: Novabiochem AG, CH-4448 Läufelfingen, Schwitzerland), welches in 40 ml CH₂Cl₂ gequollen ist, wird in Gegenwart von 1,3 ml (9,1 mmol) TDI während 1 Std. bei Raumtemperatur gerührt. Dann wird das überschüssige TDI durch 4-maliges Waschen mit je 40 ml CH₂Cl₂ entfernt, der Träger wieder in 30 ml CH₂Cl₂ aufgenommen und nach Zugabe von 259 mg (0,57 mmol) PPM während 4 Std. bei Raumtemperatur gerührt. Um die restlichen Isocyanatgruppen umzusetzen werden 10 ml Ethanol und 20 µl Triethylamin zugegeben, und das Gemisch während 40 Std. bei Raumtemperatur gerührt. Der polymerfixierte Ligand wird anschliessend 5 mal mit je 40 ml CH₂Cl₂ gewaschen und schliesslich am Hochvakuum getrocknet. Es werden weisse Kügelchen erhalten, deren Quelleigenschaften gegenüber dem eingesetzten Träger unverändert geblieben sind.
Analytik: Mikroanalyse: Phosphorgehalt= 1,17 %. Dies entspricht 0,189 mMol Diphosphin-Ligand/g.

### Beispiel A12

980 mg PS-CH₂-NH₂ Polymer, welches in 40 ml CH₂Cl₂ gequollen ist, wird in Gegenwart von 1,77 ml (11 mmol) HDI (HDI Hexamethylen-1,6-diisocyanat) während 1 Std. bei 40°C gerührt. Dann wird das überschüssige HDI durch 5-maliges Waschen mit je 20 ml CH₂Cl₂ entfernt, der Träger wieder in 20 ml CH₂Cl₂ aufgenommen und nach Zugabe von 250 mg (0,55 mmol) PPM während 18 Std. bei Raumtemperatur gerührt Um die restlichen Isocyanatgruppen umzusetzen werden 10 ml Ethanol und 30 µl Triethylamin zugegeben, und das Gemisch während 16 Std. bei 40°C gerührt. Der polymerfixierte Ligand wird anschliessend 6 mal mit je 20 ml CH₂Cl₂ gewaschen und schliesslich am Hochvakuum getrocknet. Es werden weisse Kügelchen erhalten, deren Quelleigenschaften gegenüber dem eingesetzten Träger unverändert geblieben sind.
Analytik: Mikroanalyse: Phosphorgehalt= 1,17 %. Dies entspricht 0,189 mMol Diphosphin-Ligand/g.

### Beispiel A13

Käufliches chlormethyliertes Polystyrol, welches mit 1% Divinylbenzol vernetzt ist (Cl-Gehalt = 0,7 mMol/g; der Fa. Novabiochem AG) wird nach der Methode von J.M.J Frechet et al. (Polymer, 20 (1979) 675-680) verseift 3,2g dieses Materials, das zuvor in 38ml Methylenchlorid gequollen wird, wird in Gegenwart von 6 ml TDI und 50 µl Triethylamin als Katalysator 50°C über Nacht gerührt. Nach Abkühlen der Lösung auf Raumtemperatur wird das überschüssige TDI durch 4-maliges Waschen mit je 70 ml CH₂Cl₂ entfernt. Anschliessend wird das Polymer in 70 ml CH₂Cl₂ suspendiert und nach Zugabe von 300 mg (0,66 mmol) PPM wird das Reaktionsgemisch während 15 Std. bei Raumtemperatur gerührt. Die restlichen Isocyanatgruppen werden anschliessend mit Ethanol (5 ml) in Gegenwart von 40 µl Triethylamin durch Rühren bei 50°C (7 Std.) umgesetzt. Der polymerfixierte Ligand wird anschliessend 5 mal mit je 70 ml CH₂Cl₂ gewaschen und schliesslich am Hochvakuum getrocknet. Es werden weisse Kügelchen erhalten, deren Quelleigenschaften gegenüber dem nicht modifizierten Polymer praktisch unverändert geblieben sind.
Analytik: Mikroanalyse: Phosphorgehalt= 0,93 %. Dies entspricht 0,150 mMol Diphosphin-Ligand/g.

Beispiele A14-16: Herstellung, ausgehend von löslichen, nicht-vernetzten Polymeren, wobei in einem ersten Reaktiosschritt der Diphosphinligand mit einem Diisocyanat umgesetzt wird.

Beispiel A14. Umsetzung des Diphosphinliganden mit einem eine Brückengruppe bildenden Diisocyanat.
Zu einer Lösung von 0,58 ml (4 mMol) TDI in 4 ml CH₂Cl₂ wird bei -50°C eine Lösung von 180 mg (0,4 mMol) PPM [(2S,4S)-(-)-4-Diphenylphosphino-2-(diphenylphosphinomethyl)-pyrrolidin] in 3 ml CH₂Cl₂ zugetropft. Nach 1 Std. Rühren wird die Kühlung entfernt und die Reaktionslösung mit Vakuum bei Raumtemperatur eingedampft. Nach Zugabe von 25 ml Hexan und starkem Rühren verfestigt sich der ölige Rückstand. Dieser wird dann durch 5 maliges Waschen mit je 30 ml Hexan vom überschüssigen TDI befreit und schliesslich am Hochvakuum bei Raumtemperatur getrocknet. Das so funktionalisierte Diphosphin wird für die Beispiele A13, A14 sofort weiterverwendet.

### Beispiel A15

Eine Lösung von 100 mg (ca. 0,16 mMol) des Ligand in Beispiel A13 hergestellten Liganden in 3 ml CH₂Cl₂ wird zu einer Lösung von 182 mg (0,65 mMol OH-Gruppen) PKHH-Polymer getropft. Nach Zugabe von 10 µl Triethylamin als Katalysator wird die Lösung während 48 Std. unter Rückfluss gerührt. Der polymerfixierte Ligand wird anschliessend gewaschen, indem der folgende Vorgang 5 mal wieder holt wird: Ausfällen mit 30 ml Hexan / Diethylether (2/1), Abde kantieren der obenstehenden Lösung, Lösen / Quellen des Rückstandes mit 5 ml CH₂Cl₂. Nach dem letzten Waschvorgang wird der Rückstand schliesslich am Hochvakuum getrocknet. Es wird ein weisses Pulver erhalten, welches in CH₂Cl₂ quillt.
Analytik: Mikroanalyse: Phosphorgehalt= 2,9 %. Dies entspricht 0,47 mMol Diphosphin-Ligand/g.

### Beispiel A16

Eine Lösung von 170 mg (ca. 0,27 mMol) des in Beispiel A13 hergestellten Liganden in 3 ml DMF wird zu einer Lösung von 100 mg (0,77 mMol OH-Gruppen) HEMA-Polymer in 2 ml DMF getropft. Nach Zugabe von 10 µl Triethylamin als Katalysator wird die Lösung während 16 Std. bei 56°C gerührt. Der polymerfixierte Ligand wird anschliessend gewaschen, indem der folgende Vorgang 6 mal wieder holt wird: Ausfällen mit 50 ml Hexan / Diethylether (4/1), Abde kantieren der obenstehenden Lösung, Lösen / Aufschlämmen des Rückstandes mit 3 ml DMF. Nach dem letzten Waschvorgang wird der Rückstand schliesslich am Hochvakuum getrocknet. Es wird ein weisses Pulver erhalten, welches in DMF quillt.
Analytik: Mikroanalyse: Phosphorgehalt= 3,1 %. Dies entspricht 0,5 mMol Diphosphin-Ligand/g.

Beispiele A17, A18: Herstellung, ausgehend von vernetzten Polymeren, wobei in einem ersten Reaktionsschritt der Diphosphinligand mit einem Diisocyanat umgesetzt wird.

### Beispiel A17

Immobilisierung auf PS-PEG-OH (Polyethylenglykol 600, gebunden an Polystyrol-1%-Divinylbenzol. Lieferant: Fluka (Nr. 81185)).
Eine Lösung von 130 mg (ca. 0,2 mMol) des in Beispiel A13 hergestellten Liganden in 3 ml CH₂Cl₂ wird zu einer Aufschlämmung von 2 g (0,7 mMol OH-Gruppen) Polymer in 12 ml CH₂Cl₂ getropft. Nach Zugabe von 10 µl Triethylamin als Katalysator wird die Lösung während 20 Std. unter Rückfluss gerührt. Der polymerfixierte Ligand wird anschliessend 4 mal mit je 20 ml CH₂Cl₂ gewaschen und schliesslich am Hochvakuum getrocknet. Es wird ein hellbeiges Pulver erhalten.
Analytik: Mikroanalyse: Phosphorgehalt= 0,4 %. Dies entspricht 0,065 mMol Diphosphin-Ligand/g.

### Beispiel A18

Eine Lösung von 255 mg (0,56 mMol) PPM-Ligand [(2S,4S)-(-)-4-Diphenylphosphino-2-(diphenylphosphinomethyl)-pyrrolidin] in 10 ml CH₂Cl₂ wird bei -70°C zu einer Lösung von 0,081 ml (0,56 mMol) TDI in 10 ml CH₂Cl₂ innert 3 Std. zugetropft. Man lässt die Lösung auf Raumtemperatur aufwärmen, gibt sie zu 1 g PS-CH₂-NH₂ Polymer in 20 ml CH₂Cl₂ und rührt das Gemisch. Nach 16 Std. werden, um noch freie Aminogruppen des Polymers umzusetzen, 0,13 ml (1,13 mMol) Butylisocyanat zugegeben und weitere 90 min. gerührt. Der Polymer-gebundene Ligand wird dann abfiltriert und 3 mal mit je 40 ml CH₂Cl₂ gewaschen. Um eventuell nicht-umgesetzte lsocyanatgruppen umzusetzen wird das Gemisch anschliessend in 40 ml Ethanol / CH₂Cl₂ (1/1) und 30 µl Triethylamin während 20 Std. gerührt. Schliesslich wird nochmals mit 4 mal 40 ml CH₂Cl₂ gewaschen und das Polymer am Hochvakuum getrocknet. Es werden weisse Kügelchen erhalten, deren Quelleigenschaften gegenüber dem eingesetzten Träger unverändert geblieben sind. Analytik: Mikroanalyse: Phosphorgehalt= 1,3 %. Dies entspricht 0,21 mMol Diphosphin-Ligand/g.

### Beispiele B1-B22: Hydrierungen

### a) Allgemeines Vorgehen

Mit den polymergebundenen Liganden 1-16 werden enantioselektive katalytische Hydrierungen durchgeführt. Dazu werden diese Liganden "in situ" zu entsprechenden Rh-Katalysatoren überführt. Als Hydriersubstrat wird Acetamidozimtsäure-methylester verwendet. Alle Operationen ausser die Hydrierung selbst werden unter Argon durchgeführt und es werden entgaste Lösungsmittel verwendet. Die Reaktionsverläufe und die Umsätze werden mittels Gaschromatographie (GC) verfolgt (Säule: SE 54, Länge: 15m, Trägergas: He). Die Enantioselektivitäten werden ebenfalls mittels GC bestimmt (Säule: Chirasil-L-val, Länge 50m, Trägergas: He).

### b) Standard-Vorgehen bei der Hydrierung:

15 µMol Ligand werden während 15 min. in 5 ml Tetrahydrofuran (THF) oder einem Gemisch aus THF und Methanol (MeOH) gerührt. (Bemerkung: In THF oder in MeOH lösliche oder quellbare Polymere lösen sich oder quellen in dieser Zeitspanne.) Dann wird eine Lösung von 12,5 µMol [Rh(Cyclooctadien)₂]BF₄, in 1 ml MeOH zugegeben und 15 min. weitergerührt. (Bemerkung: Dabei färben sich die quellbaren und die makroporösen Träger gelb-orange und die Lösung wird farblos.) Zu dem auf diese Weise "in situ" hergestellten Rhodium-Diphosphinkomplex wird eine Lösung von 2,5 mMol Acetamidozimtsäure-methylester als Substrat (Substrat / Katalysator = in der Regel 200) in 16 ml MeOH oder MeOH/THF (siehe Tabelle) zugegeben. Dann wird 3 mal evakuiert, H₂ eingeleitet und schliesslich unter intensivem Rühren mit Magnetrührer bei H₂ Normaldruck hydriert.

### Beispiel B23.

Alle Operationen ausser der Hydrierung werden unter Inertgas (Argon) durchgeführt. Die ee-Bestimmung erfolgt so, dass die Probe von Phenylalanin mit [Me₃O]BF₄ zum Phenylalanin-Methylester überführt wird und der ee mittels GC, Säule: Chirasil-L-val, Länge 50 m, Trägergas He bestimmt wird.
Zu einer Aufschlämmung von 86 mg (0.013 mmMol) des Liganden aus Beispiel A13 in 3 ml THF werden 4.1 mg (0.01 mMol) [Rh(COD)₂]BF₄, gelöst in 3 ml MeOH zugegeben und gerührt. Dabei entfärbt sich die Lösung und der immobilisierte Ligand färbt sich orange. Anschliessend werden 718 mg (3.5 mMol) Acetamidozimtsäure gelöst in 8ml MeOH und 8 ml THF zugegeben. Dann wird 3 mal evakuiert und H₂ eingeleitet und schliesslich unter intensivem Rühren (mit Magnetrührer) bei 1 bar H₂-Druck hydriert. Nach 3 Std. wird die Hydrierung abgestellt. Der Umsatz ist vollständig und der ee beträgt 97.7%.

Die Hydrier-Resultate sind in der Tabelle 1 zusammengefasst, der Enantiomerenüberschuss ist als "ee", abweichende Verfahrensparameter sind in der Spalte Bemerkungen angegeben.

**Tabelle 1**

| Nr. | Ligand aus Beispiel | Verhältnis Substr./Kata. | MeOH/ THF | Umsatz % | Zeit Min. | ee % | Bemerkungen |
|---|---|---|---|---|---|---|---|
| B1 | A1 | 200 | 3,5/1 | 100 | 19 | 93,5 | |
| B2 | A1 | 200 | 1/21 | 100 | 39 | 80,5 | |
| B3 | A2 | 200 | 3,5/1 | 100 | 12 | 95 | ¹⁾ |
| B4 | A2 | 200 | 1/21 | 100 | 30 | 92 | |
| B5 | A3 | 200 | 3,5/1 | 100 | 20 | 93 | ¹⁾ |
| B6 | A4 | 200 | 3,5/1 | 100 | 15 | 90 | |
| B7 | A5 | 200 | 3,5/1 | 100 | 35 | 93 | |
| B8 | A5 | 200 | 1/21 | 100 | 32 | 83 | |
| B9 | A6 | 200 | 3,5/1 | 100 | 15 | 95,5 | |
| B10 | A6 | 200 | 1/21 | 100 | 26 | 94 | |
| B11 | A7 | 1000 | 3,5/1 | 100 | 37 | 89,2 | H₂ Druck von 55 bar Stahlautoklav |
| B12 | A7 | 1000 | 1,5/13 | 100 | 30 | 91,1 | H₂ Druck von 55 bar Stahlautoklav |
| B13 | A8 | 200 | 1/21 | 99 | 16 | 74 | |
| B14 | A9 | 200 | 3,5/1 | 100 | 15 | 95 | |
| B15 | A10 | 200 | 3,5/1 | 95 | 240 | 87 | |
| B16 | A11 | 200 | 1/1 | 80 | 105 | 91 | |
| B17 | A12 | 200 | 1/1 | 99 | 60 | 94,5 | |
| B18 | A15 | 200 | 3,5/1 | 100 | 29 | 94,8 | |
| B19 | A16 | 200 | 3,5/1 | 100 | 16 | 94,7 | ¹⁾ |
| B20 | A16 | 200 | 1/0 | 100 | 66 | 90,6 | ¹⁾ |
| B21 | A17 | 200 | 3,5/1 | 97 | 60 | 90 | |
| B22 | A18 | 200 | 1/1 | 50 | 125 | 90 | |
| B23 | A13 | 350 | 1/1 | 100 | 180 | 97,7 | |

| | | | | | | | |
|---|---|---|---|---|---|---|---|
| ¹⁾ Beispiele, die durch Ultrafiltration abgetrennt wurden, nachstehend als Beispiele C1-C4 beschrieben. | | | | | | | |

Die Katalysatoren, welche auf quellbaren oder makroporösen (unlöslichen) Träger fixiert sind (Beispiele A10-A13 und A16, A17), lassen sich durch eine einfache Filtration oder durch Setzen-lassen, bzw. Zentrifugieren und Abdekanntieren abtrennen. Die erhaltenen Lösungen sind jeweils farblos.

Die auf löslichen Trägern fixierten Katalysatoren können auf zwei verschiedenen Wegen abgetrennt werden:
1) Durch Ausfällen nach Zugabe eines Lösungsmittel (z.B. Hexan), in welchem sie nicht löslich sind, und anschliessender Filtration.
2) Durch Ultrafiltration.

### C) Abtrennungsbeispiele durch Ultrafiltration, Beispiele C1-C4.

Das Reaktionsgemisch wird in eine Filtrations-Apparatur gegeben, und mit einem Druck von 5-10 bar durch eine Ultrafiltrationsmembran gepresst, beispielsweise eine Polysulfon Membran vom Typ Omega 3K der Firma Filtron oder die Membran UFM410 der Firma Amafilter. Es werden farblose Lösungen erhalten. Die Ergebnisse sind in Tabelle 2 dargestellt. Die Rhodiumbestimmung erfolgte mittels ionenselektiver Massenspektrometrie.

**Tabelle 2**

| Nr. | Hydrierversuch Nr. | Membran | Verlust an Rhodium |
|---|---|---|---|
| C1 | B3 | UFM410 | 1,6% |
| C2 | B5 | UFM410 | 2% |
| C3 | B20 | Omega 3K | 5% |
| C4 | B21 | Omega 3K | 1,2% |

### D) Wiedereinsatz des Katalysators aus Beispiel B23

Die farblose Reaktionslösung aus Beispiel B23 wird mit einer Spritze abgezogen, nachdem man mit Argon inertisiert hat. Zum zurückbleibenden Katalysator wird eine Lösung von 718mg (3,5mMol) Acetamidozimtsäure gelöst in 11ml MeOH und 11 ml Tetrahydrofuran zugegeben und dann wieder wie oben hydriert. Nach 3 Std. ist der Umsatz vollständig und man erhält einen Enantiomerenüberschuss ee von 96,9 %.

### E) Iminhydrierungen mit Ir-Katalysator

### Beispiel E1. Herstellung von N-(2'-Methyl-6'-ethyl-phen-1'-yl)-N-(1-Methoxymethyl)-ethylamin mit immobilisiertem Liganden A13

Alle Manipulationen werden unter Inertgas durchgeführt mit Ausnahme der Hydrierung.
79 mg (0.0118 mmol) Ligand aus Beispiel A13 werden auf einmal während 5 min. in 2 ml THF gerührt. Dann wird eine Lösung von 3,2 mg [Ir(COD)Cl]₂ (0.0098 mMol Ir) in 2 ml THF zugegeben und langsam gerührt, wobei sich die gelbe Lösung entfärbt. In einem zweiten Kolben werden 4,8 mg Tetrabutylammoniumiodid und 2 g (9,8 mMol) N-(2'-Methyl-6'-ethylphen-1'-yl)-N-(1-Methoxymethyl)-ethylimin gegeben, die Lösung wird unter Inertgas gesetzt und zum Katalysator gegeben. Das Reaktionsgemisch wird dann mit einer Stahlkapillare unter Inertgas-Gegenstrom in einen 50 ml Stahlautoklaven gepresst und anschliessend bei 80 bar Wasserstoffdruck bei 25° C hydriert. Nach 72 Std. wird der Wasserstoff entspannt und der Katalysator abfiltriert. Der Umsatz beträgt nach gaschromatographischer Bestimmung 80%. Die optische Ausbeute wird mittels HPLC (Säule: Chiracel OD) bestimmt, wobei dazu eine durch Flashchromatographie (Kieselgel Merck 60, Laufmittel = Hexan /Essigsäureäthylester) gereinigte Probe verwendet wird. Der ee beträgt 59,9% (R).

## Patentansprüche

1. Polymere mit wiederkehrenden Strukturelementen mindestens eines Monomeren MM, welches direkt oder in einer Seitenkette eine Hydroxylgruppe oder eine Primär- oder Sekundäramingruppe als funktionelle Gruppe gebunden enthält, **dadurch gekennzeichnet, dass** die funktionelle Gruppe über eine von einem Diisocyanat gebildete Brückengruppe Q an die Hydroxylgruppe oder Primär- oder Sekundäramingruppe eines aliphatischen, cycloaliphatischen, heterocycloaliphatischen, aromatischen oder heteroaromatischen ditertiären Diphosphins gebunden ist, dessen Phosphingruppen in 1,2, 1,3, 1,4 oder 1,5-Stellung zueinander mit einer Kohlenstoffkette verbunden sind.

2. Polymere nach Anspruch 1, **dadurch gekennzeichnet, dass** Q ein lineares oder verzweigtes unsubstituiertes oder ein oder mehrfach mit C₁-C₆ -Alkyl, C₁-C₆ -Alkoxy substituiertes aliphatisches C₂-C₂₀ -Alkyl, unsubstituiertes oder mit C₁-C₆ -Alkyl, C₁-C₆-Alkoxy ein oder mehrfach substituiertes C₃-C₈ -Cycloalkyl oder Heterocycloalkyl, mit unsubstituiertem oder mit C₁-C₆ -Alkyl, C₁-C₆ -Alkoxy substituiertem C₃-C₈ Cycloalkyl oder Heterocycloalkyl unterbrochenes lineares oder verzweigtes unsubstituiertes oder mit C₁-C₆-Alkyl, C₁-C₆ -Alkoxy substituiertes aliphatisches C₂-C₂₀ -Alkyl, unsubstituiertes oder mit C₁-C₆-Alkyl, C₁-C₆ -Alkoxy ein oder mehrfach substituiertes Phenyl, Naphthyl, Biphenyl oder C₃-C₁₀ Heteroaryl, durch Phenyl, Naphthyl oder C₃-C₁₀ Heteroaryl unterbrochenes lineares oder verzweigtes unsubstituiertes oder mit C₁-C₆ -Alkyl, C₁-C₆-Alkoxy substituiertes aliphatisches C₂-C₂₀ -Alkyl ist;

3. Polymere nach Anspruch 1, **dadurch gekennzeichnet, dass** das die Brückengrupppe Q bildende Diisocyanat ausgewählt wird aus der Gruppe bestehend aus 1,6-Bis-[isocyanat]-hexan, 5-lsocyanat-3-(isocyanatmethyl)-1,1,3-trimethylcyclohexan, 1,3-Bis-[5-isocyanat-1,3,3-trimethyl-phenyl]-2,4-dioxo-1,3-diazetidin, 3,6-Bis-[9-isocyanat-nonyl]-4,5-di-(1-heptenyl)-cyclohexen, Bis-[4-isocyanat-cyclohexyl]-methan, trans-1,4-Bis-[isocyanat]-cyclohexan, 1,3-Bis-[isocyanatmethyl]-benzol, 1,3-Bis-[1-isocyanat-1-methyl-ethyl]-benzol, 1,4-Bis-[2-isocyanat-ethyl]-cyclohexan, 1,3-Bis-[isocyanatmethyl]-cyclohexan, 1,4-Bis-[1-isocyanat-1-methylethyl]-benzol, Bis-[isocyanat]-isododecylbenzol, 1,4-Bis-[isocyanat]-benzol, 2,4-Bis-[isocyanat]-toluol, 2,6-Bis-[isocyanat]-toluol, 2,4-/2,6-Bis-[isocyanat]-toluol, 2-Ethyl-1,2,3-tris-[3-isocyanat-4-methyl-anilinocarbonyloxy]-propan, N,N'-Bis-[3-isocyanat-4-methylphenyl]-harnstoff, 1,4-Bis-[3-isocyanat-4-methylphenyl]-2,4-dioxo-1,3-diazetidin, 1,3,5-Tris-[3-isocyanat-4-methylphenyl]-2,4,6-trioxohexahydro-1,3,5-triazin, 1,3-Bis-[3-isocyanat-4-methylphenyl]-2,4,5-trioxoimidazolidin, Bis-[2-isocyanatphenyl]-methan, (2-lsocyanat-phenyl)-(4-isocyanat-phenyl)-methan, Bis-[4-isocyanat-phenyl]-methan, 2,4-Bis-[4-isocyanatbenzyl]-1-isocyanatbenzol, [4-lsocyanat-3-(4-isocyanat-benzyl)-phenyl]-[2-isocyanat-5-(4-isocyanat-benzyl)-phenyl] methan, Tris-[4-isocyanat-phenyl]-methan, 1,5-Bis-[isocyanat]-naphthalin, 4,4'-Bis[isocyanat]-3,3'-dimethyl-biphenyl.

4. Polymere nach Anspruch 3, **dadurch gekennzeichnet, dass** das die Brückengruppe Q bildende Diisocyanat ausgewählt wird aus der Gruppe bestehend aus 1,6-Bis-[isocyanat]-hexan, 5-lsocyanat-3-(isocyanatmethyl)-1,1,3-trimethylcyclohexan, 2,4-Bis-[isocyanat]-toluol, 2,6-Bis-[isocyanat]-toluol, 2,4-/2,6-Bis-[isocyanat]-toluol, Bis-[4-isocyanat-phenyl]-methan.

5. Polymere nach Anspruch 1, **dadurch gekennzeichnet, dass** die 1,2-, 1,3-, 1,4-, oder 1,5-ständigen tertiären Phosphingruppen an einen aliphatischen Rest mit insgesamt 4 bis 12 C-Atomen, einen cycloaliphatischen Rest mit 3 bis 8 C-Atomen, einen heterocycloaliphatischen Rest mit 2-6 C-Atomen im Heterocyclus, einen aromatischen Rest mit 6 bis 20 C-Atomen oder einen heteroaromatischen Rest mit 2 bis 12 C-Atomen im Heterocyclus gebunden sind.

6. Polymere nach Anspruch 1, **dadurch gekennzeichnet, dass** das Diphosphin eine Verbindung der Formel la oder Ib ist 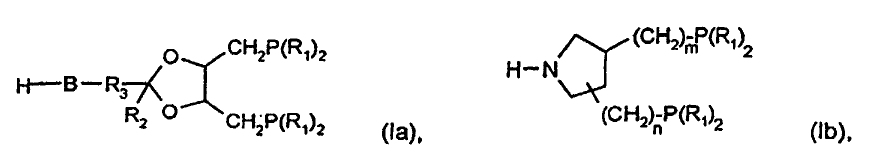 worin
die R₁ gleiche oder verschiedene Reste darstellen und unabhängig voneinander C₁-C₁₂-Alkyl, C₅-C₁₂-Cycloalkyl, Phenyl, mit C₁-C₄-Alkyl oder C₁-C₄-Alkoxy substituiertes C₅-C₁₂-Cycloalkyl oder mit ein bis drei C₁-C₄-Alkyl, C₁-C₄-Alkoxy, C₁-C₄-Halogenalkyl, -SiR₄R₅R₆, Halogen, -SO₃M, -CO₂M, -PO₃M, -NR₇R₈ oder -[⁺NR₇R₈R₉]X⁻ substituiertes Phenyl darstellen;
oder beide R₁ einer Gruppe (R₁)₂P zusammen für o,o' -Diphenylen stehen;
R₂ Wasserstoff, lineares oder verzweigtes C₁-C₁₂-Alkyl, Phenyl oder Benzyl darstellt;
R₃ C₁-C₁₂-Alkylen bedeutet;
die Gruppen (R₁)₂P(CH₂)_{m bzw. n} in o- oder m-Stellung zueinander stehen;
B für -NR₁₀- oder -O-steht;
R₄, R₅ und R₆ unabhängig voneinander für C₁-C₁₂-Alkyl oder Phenyl stehen;
R₇ und R₈ H, C₁-C₁₂-Alkyl, Phenyl oder
R₇ und R₈ zusammen Tetramethylen, Pentamethylen oder 3-Oxa-1,5-Pentylen darstellen;
R₉ H oder C₁-C₄-Alkyl bedeutet,
M für H oder ein Alkalimetall steht, X⁻ das Anion einer einbasischen Säure ist;
R₁₀ Wasserstoff, lineares oder verzweigtes C₁-C₆-Alkyl ist und
m und n unabhängig voneinander 0 oder 1 bedeuten.

7. Polymere nach Anspruch 6, **dadurch gekennzeichnet, dass** die R₁ in Formel la oder Ib C₁-C₈-Alkyl darstellen.

8. Polymere nach Anspruch 6, **dadurch gekennzeichnet, dass** die R₁ in Formel la oder Ib als Cycloalkyl 5 bis 8 Ring-C-Atome enthalten.

9. Polymere nach Anspruch 6, **dadurch gekennzeichnet**, das R₁ in Formel la oder Ib Phenyl, Phenyl 2-Methyl-, 3-Methyl-, 4-Methyl-, 2- oder 4-Ethyl-, 2- oder 4-i-Propyl-, 2- oder 4-t-Butyl-, 2-Methoxy-, 3-Methoxy-, 4-Methoxy-, 2- oder 4-Ethoxy-, 4-Trimethylsilyl-, 2- oder 4-Fluor-, 2,4-Difluor-, 2- oder 4-Chlor-, 2,4-Dichlor-, 2,4-Dimethyl-, 3,5-Dimethyl-, 2-Methoxy-4-methyl-, 3,5-Dimethyl-4-methoxy-, 3,5-Dimethyl-4-(dimethylamino)-, 2- oder 4-Amino-, 2-oder 4-Methylamino-, 2- oder 4-(Dime thylamino)-, 2- oder 4-SO₃H-, 2- oder 4-SO₃Na-, 2-oder 4-[⁺NH₃Cl⁻]-, 2,4,6-Trimethylphen-1-yl oder 3,4,5-Trimethylphen-1-yl, 4-Trifluormethylphenyl oder 3,5-Di(trifluormethyl) darstellen.

10. Polymere nach Anspruch 6, **dadurch gekennzeichnet, dass** die R₁ in Formel la oder Ib gleiche Reste darstellen und Phenyl, Cyclohexyl, t-Butyl, 2- oder 4-Methylphen-1-yl, 2- oder 4-Methoxyphen-1-yl, 2- oder 4-(Dimethylamino)phen-1-yl, 3,5-Dimethyl-4-(di methylamino)phen-1-yl oder 3,5-Dimethyl-4-methoxyphen-1-yl, 4-Trifluormethylphenyl oder 3,5-Di(trifluormethyl) bedeuten.

11. Polymere nach Anspruch 6, **dadurch gekennzeichnet, dass** die R₁ in Formel la oder Ib Phenyl sind und m+n in Formel Ib 0, 1 oder 2 sind.

12. Polymere nach Anspruch 6, **dadurch gekennzeichnet, dass** in Formel Ib R₁ Phenyl bedeutet, m für 0 und n für 1 stehen und die Gruppen (R₁)₂P- und (R₁)₂PCH₂- in m-Stellung gebunden sind, oder m und n für 0 stehen und die Gruppen (R₁)₂P- in o-Stellung gebunden sind.

13. Polymere, nach Anspruch 6, **dadurch gekennzeichnet, dass** die Verbindungen der Formel la oder Ib in Form der optisch aktiven R,R-, S,S-, R,S- oder S,R-Isomeren vorliegen, bezogen auf die Stellung der Phosphin(methyl)-Gruppen.

14. Polymere nach Anspruch 1, **dadurch gekennzeichnet, dass** es sich um unvernetzte thermoplastische, vernetzte oder strukturvernetzte Polymere handelt.

15. Polymere nach Anspruch 1, **dadurch gekennzeichnet, dass** es sich um im wesentlichen unvernetzte in organischen Lösungsmitteln lösliche, teilvernetzte quellbare oder hochvernetzte poröse Polymere handelt.

16. Polymere nach Anspruch 1, **dadurch gekennzeichnet, dass** das hydroxyl-, primär- oder sekundäraminfunktionelle Monomere von 1 bis 100 Molprozent am Aufbau des Polymeren beteiligt ist.

17. Polymere nach Anspruch 16, **dadurch gekennzeichnet, dass** das hydroxyl-, primär- oder sekundäraminfunktionelle Monomere von 5 bis 100 Molprozent am Aufbau des Polymeren beteiligt ist.

18. Polymere nach Anspruch 17, **dadurch gekennzeichnet, dass** das hydroxyl-, primär- oder sekundäraminfunktionelle Monomere von 10 bis 100 Molprozent am Aufbau des Polymeren beteiligt ist.

19. Polymere nach Anspruch 1, **dadurch gekennzeichnet, dass** die Beladung des Polymeren mit 1,2-,1,3-,1,4- oder 1,5-ständigen tertiären Diphosphingruppen zwischen 5 und 100 Mol-%, bezogen auf die verfügbaren Hydroxyl-, Primär- oder Sekundäramingruppe ist.

20. Polymere nach Anspruch 19, **dadurch gekennzeichnet, dass** die Beladung des Polymeren mit 1,2-,1,3-,1,4- oder 1,5-ständigen tertiären Diphosphingruppen zwischen 5 und 50 Mol-%, bezogen auf die verfügbaren Hydroxyl-, Primär- oder Sekundäramingruppe ist.

21. Polymere nach Anspruch 1, **dadurch gekennzeichnet, dass** die das Polymer bildenden Monomeren ausgewählt werden aus der Gruppe bestehend aus Styrol, p-Methylstyrol oder α-Methylstyrol, von denen mindestens eines eine Hydroxylgruppe oder eine Primär- oder Sekundär- Amingruppe als funktionelle Gruppe gebunden enthält.

22. Polymere nach Anspruch 21, **dadurch gekennzeichnet, dass** weitere Comonomere von Dienen oder Acrylderivaten, wie z.B. Butadien, Acrylnitril, Alkylmethacrylat, Butadien-Alkylacrylat und -Methacrylat, Maleinsäureanhydrid, Acrylnitril-Methylacrylat vorhanden sind, die statistische oder Block-Copolymere bilden.

23. Polymere nach Anspruch 1, **dadurch gekennzeichnet, dass** die das Polymer bildenden Monomeren ausgewählt werden aus der Gruppe bestehend aus α,β-ungesättigten Säuren, deren Estern oder Amiden, von denen mindestens eines eine Hydroxylgruppe oder eine Primär- oder Sekundär- Amingruppe als funktionelle Gruppe gebunden enthält.

24. Polymere nach Anspruch 23, **dadurch gekennzeichnet, dass** die das Polymer bildenden Monomeren ausgewählt werden aus der Gruppe bestehend aus Acrylaten und deren C₁-C₄-Alkylestern, Methacrylaten und deren C₁-C₄-Alkylestern, Acrylamid und Acrylnitril, von denen mindestens eines eine Hydroxylgruppe oder eine Primär- oder Sekundär-Amingruppe als funktionelle Gruppe gebunden enthält.

25. Polymere nach Anspruch 24 **dadurch gekennzeichnet, dass** weitere olefinisch ungesättigte Monomeren vorhanden sind, die statistische oder Block-Copolymere bilden.

26. Polymere nach Anspruch 1, **dadurch gekennzeichnet, dass** das Polymer von Monomeren gebildet wird, die Vinylalkohol als Homopolymer oder Vinylalkohol als Copolymer mit Vinylacetat, -stearat, -benzoat, -maleat, Vinylbutyral, Allylphthalat, Allylmelamin enthalten.

27. Polymere nach Anspruch 1, **dadurch gekennzeichnet, dass** die das Polymer bildenden Monomeren Phenol und ein C₁-C₄-Aldehyd sind.

28. Polymere nach Anspruch 1, **dadurch gekennzeichnet, dass** die das Polymer bildenden Monomeren ein Polyepoxid aus cyclischen C₃-C₆-Ethern oder C₂-C₆-Alkylenglykolen und Bisglycidylethern bilden.

29. Polymere nach Anspruch 1, **dadurch gekennzeichnet, dass** es Polysaccharide sind.

30. Polymere nach Anspruch 29, **dadurch gekennzeichnet, dass** die Polysaccharide Cellulose, Celluloseacetate, -propionate oder -butyrate, Celluloseether, Stärke, Chitin, und Chitosan sind.

31. Polymere nach Anspruch 1, **dadurch gekennzeichnet, dass** die wiederkehrenden Strukturelemente mindestens eines Monomeren MM, eine Verbindung der Formel IIa, IIb, llc oder IId bedeuten 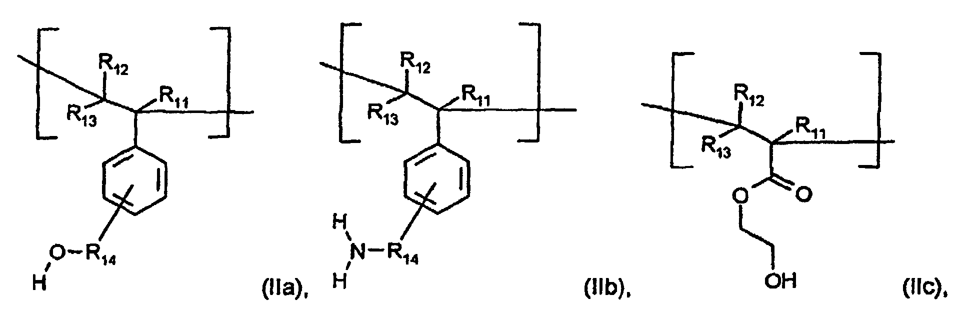 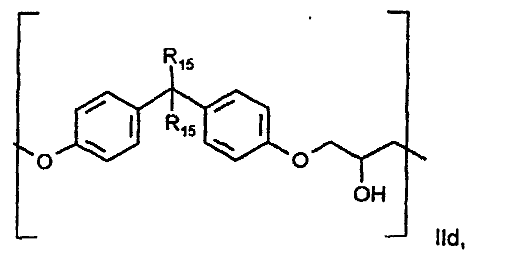 worin R₁₄ C₁-C₄-Alkylen und
R₁₁, R₁₂, R₁₃ und R₁₅ unabhängig voneinander Wasserstoff oder C₁-C₄-Alkyl sind.

32. Polymere nach Anspruch 31, **dadurch gekennzeichnet, dass** das Molekulargewicht 2000 bis 5 000 000 Dalton beträgt.

33. Polymere nach Anspruch 32, **dadurch gekennzeichnet, dass** das Molekulargewicht 10 000 bis 1 000 000 Dalton beträgt.

34. Polymere nach Anspruch 15, **dadurch gekennzeichnet, dass** es sich um hochvernetztes makroporöses Polystyrol oder Polyacrylat handelt.

35. Polymere nach Anspruch 15, **dadurch gekennzeichnet, dass** die Partikelgrösse der porösen hochvernetzten Polymeren 10 µm bis 2000 µm beträgt.

36. Polymere nach Anspruch 15, **dadurch gekennzeichnet, dass** die spezifische Oberfläche der porösen hochvernetzten Polymeren 5 bis 1000 m² aufweisen.

37. Verfahren zur Herstellung von Polymeren nach Anspruch 1, **dadurch gekennzeichnet, dass** man die in organischen Lösungsmitteln löslichen, quellbaren oder unlöslichen Polymeren mit wiederkehrenden Strukturelementen mindestens eines Monomeren MM, welches direkt oder in einer Seitenkette eine Hydroxylgruppe oder eine Primär- oder Sekundär- Amingruppe als funktionelle Gruppe gebunden enthält,
A) in einem ersten Schritt mit einem eine Brückengruppe Q bildenden Diisocyanat in einem inerten organischen Lösungsmittel ganz oder teilweise umsetzt und das Produkt in einem zweiten Schritt mit einem aliphatischen, cycloaliphatischen, heterocycloaliphatischen, aromatischen oder heteroaromatischen ditertiären Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise umsetzt; oder
B) in einem ersten Schritt ein aliphatisches, cycloaliphatisches, heterocycloaliphatisches, aromatisches oder heteroaromatisches ditertiäres Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise mit einem eine Brückengruppe Q bildenden Diisocyanat in einem inerten organischen Lösungsmittel umsetzt und das Produkt in einem zweiten Schritt mit einem Polymeren mit wiederkehrenden Strukturelementen mindestens eines Monomeren MM, welches eine Hydroxylgruppe oder eine Primär- oder Sekundär- Amingruppe als funktionelle Gruppe gebunden enthält, ganz oder teilweise umsetzt; und
C) gegebenenfalls noch freie Isocyanatgruppen mit einem C₂-C₂₄-Diol oder C₂-C₂₄-Diamin vernetzt oder mit einem C₂-C₁₂-Alkohol oder C₂-C₁₂-Amin abreagiert.

38. Verfahren zur Herstellung von vernetzten Polymeren nach Anspruch 37, **dadurch gekennzeichnet, dass** man die Polymeren mit wiederkehrenden Strukturelementen mindestens eines Monomeren MM, welches eine Hydroxylgruppe oder eine Primär- oder Sekundär- Amingruppe als funktionelle Gruppe gebunden enthält,
A) in einem ersten Schritt mit einem eine Brückengruppe Q bildenden Diisocyanat in einem inerten organischen Lösungsmittel ganz oder teilweise umsetzt und das Produkt in einem zweiten Schritt mit einem aliphatischen, cycloaliphatischen, heterocycloaliphatischen, aromatischen oder heteroaromatischen ditertiären Diphosphin, dessen Phosphingruppen in 1,2, 1,3, 1,4 oder 1,5-Stellung zueinander mit einer Kohlenstoffkette verbunden sind, und welches eine Hydroxylgruppe oder eine Primär- oder Sekundär- Amingruppe enthält, ganz oder teilweise umsetzt und die restlichen Diisocynatgruppen mit einem aliphatischen C₂-C₂₄-Diol oder C₂-C₂₄-Diamin vernetzt.

39. Verfahren zur Herstellung von Polymeren nach Anspruch 37, **dadurch gekennzeichnet, dass** man die Polymere mit wiederkehrenden Strukturelementen mindestens eines Monomeren MM, welches eine Hydroxylgruppe oder eine Primär- oder Sekundär-Amingruppe als funktionelle Gruppe gebunden enthält,
A) in einem ersten Schritt mit einem Diisocyanat Q In einem inerten organischen Lösungsmittel ganz oder teilweise umsetzt, das Produkt in einem zweiten Schritt mit einem aliphatischen, cycloaliphatischen heterocycloaliphatischen, aromatischen oder heteroaromatischen 1,2, 1,3, 1,4 oder 1,5- Diphosphin, welches eine Hydroxylgruppe oder eine Primär- oder Sekundär- Amingruppe enthält teilweise umsetzt und die restlichen Diisocynatgruppen mit einem aliphatischen C₂-C₁₂-Alkohol oder C₂-C₁₂-Amin reagieren lässt.

40. Verfahren nach Anspruch 38, **dadurch gekennzeichnet, dass** 0,01 bis 10 Molprozent der vorhandenen Isocyanatgruppen vernetzt werden.

41. Verfahren nach Anspruch 37, **dadurch gekennzeichnet, dass** das Verfahren in einem polaren oder unpolaren aprotischen Lösungsmittel durchgeführt wird.

42. Verfahren nach Anspruch 41, **dadurch gekennzeichnet, dass** das Lösungsmittel ausgewählt wird aus der Gruppe bestehend aus halogeniertem Kohlenwasserstoff, Ester, Keton, Säureamid, Ether, Dimethylsulfoxid oder einer aromatischen Verbindung.

43. Metallkomplexe von Rhodium oder Iridium mit polymeren 1,2-, 1,3-, oder 1,4-Diphosphinen nach Anspruch 1 der Formel IIIa oder IIIb,
POL (YMeZ) (IIIa)
POL (YMe)⁺ A⁻ (IIIb),
wobei
POL ein polymer gebundenes Diphosphin nach Anspruch 1 bedeutet,
Y für zwei Monoolefinliganden oder einen Dienliganden steht;
Z -Cl, -Br, oder -I darstellt;
Me für Rhodium oder Iridium steht
und A⁻ das Anion einer Sauerstoffsäure oder Komplexsäure ist.

44. Metallkomplexe nach Anspruch 43, **dadurch gekennzeichnet, dass** Y für 1,5-Hexadien, 1,5-Cyclooctadien oder Norbornadien steht.

45. Metallkomplexe nach Anspruch 43, **dadurch gekennzeichnet, dass** Z für -Cl oder -Br steht

46. Metallkomplexe nach Anspruch 43, **dadurch gekennzeichnet, dass** A⁻ für ClO₄⁻, CF₃SO₃⁻, CH₃SO₃⁻, HSO₄⁻, BF₄⁻, B(Phenyl)₄⁻, PF₆⁻, SbCl₆⁻, AsF₆⁻ oder SbF₆⁻ steht.

47. Metallkomplexe nach Anspruch 43, **dadurch gekennzeichnet, dass** der Diphosphinligand eine Verbindung der Formel la oder Ib nach Anspruch 6 ist.

48. Verfahren zur Herstellung von Metallkomplexen nach Anspruch 43, **dadurch gekennzeichnet, dass** man Verbindungen nach Anspruch 1 mit einer Metallverbindung der Formel [Me(Y)Z]₂ oder Me(Y)₂⁺ A⁻ umsetzt, worin Me, Y, Z und A⁻ die in Anspruch 43 angegebenen Bedeutungen haben.

49. Verwendung von Metallkomplexen nach Anspruch 43 als heterogene oder homogene Katalysatoren zur asymmetrischen Hydrierung von prochiralen Verbindungen mit Kohlenstoff- oder Kohlenstoff-/Heteroatomdoppelbindungen.

50. Verwendung von Metallkomplexen nach Anspruch 43 zur Hydrierung von unsymmetrischen Kohlenstoffdoppelbindungen, Ketiminen und Ketonen.

51. Verfahren zur asymmetrischen Hydrierung von Verbindungen mit Kohlenstoff- oder Kohlenstoff-Heteroatomdoppelbindungen, **dadurch gekennzeichnet, dass** man die Verbindungen bei einer Temperatur von -20 bis 80 °C und einem Wasserstoffdruck von 10⁵ bis 2x10⁷ Pa in Gegenwart katalytischer Mengen eines oder mehrerer Komplexe nach Anspruch 43 hydriert.

## Claims

1. Polymers having recurring structural elements of at least one monomer MM which contains a hydroxyl group or a primary or secondary amine group as a functional group bonded directly or in a side chain, **characterized in that** the functional group is bonded via a bridge group Q formed by a diisocyanate to the hydroxyl group or primary or secondary amino group of an aliphatic, cycloaliphatic, heterocycloaliphatic, aromatic or heteroaromatic ditertiary diphosphine, the phosphine groups of which are bonded to a carbon chain in the 1,2-, 1,3-, 1,4- or 1,5-position relative to one another.

2. Polymers according to Claim 1, **characterized in that** Q is a linear or branched aliphatic C₂-C₂₀alkyl which is unsubstituted or mono- or polysubstituted by C₁-C₆alkyl or C₁-C₆alkoxy, C₃-C₈cycloalkyl or heterocycloalkyl which is unsubstituted or mono- or polysubstituted by C₁-C₆alkyl or C₁-C₆alkoxy, linear or branched aliphatic C₁-C₂₀alkyl which is interrupted by unsubstituted or C₁-C₆alkyl- or C₁-C₆alkoxy-substituted C₃-C₈cycloalkyl or heterocycloalkyl and is unsubstituted or substituted by C₁-C₆alkyl or C₁-C₆alkoxy, phenyl, naphthyl, biphenyl or C₃-C₁₀heteroaryl which is unsubstituted or mono- or polysubstituted by C₁-C₆alkyl or C₁-C₆alkoxy, or linear or branched aliphatic C₂-C₂₀alkyl which is interrupted by phenyl, naphthyl or C₃-C₁₀heteroaryl and is unsubstituted or substituted by C₁-C₆alkyl or C₁-C₆alkoxy.

3. Polymers according to Claim 1, **characterized in that** the diisocyanate forming the bridge group Q is chosen from the group consisting of 1,6-bis[isocyanato]hexane, 5-isocyanato-3-(isocyanatomethyl)-1,1,3-trimethylcyclohexane 1,3-bis[5-isocyanato-1,3,3-trimethylphenyl]-2,4-dioxo-1,3-diazetidine, 3,6-bis[9-isocyanatononyl]4,5-di(1-heptenyl)cyclohexene, bis[4-isocyanatocyclohexyl]methane, trans-1,4-bis[isocyanato]cyclohexane, 1,3-bis[isocyanatomethyl]benzene, 1,3-bis[1-isocyanato-1-methylethyl]benzene, 1,4-bis[2-isocyanatoethyl]cyclohexane, 1,3-bis[isocyanatomethyl]cyclohexane, 1, 4-bis[1-isocyanato-1-methylethyl]benzene, bis[isocyanato]isododecylbenzene,1,4-bis[isocyanato]benzene, 2,4-bis[isocyanato]toluene, 2,6-bis[isocyanato]toluene, 2,4-/2,6-bis[isocyanato]toluene,2-ethyl-1,2,3-tris[3-isocyanato-4-methylanilinocarbonyloxy]propane, N,N'-bis[3-isocyanato-4-methylphenyl]urea, 1,4-bis[3-isocyanato-4-methylphenyl]-2,4-dioxo-1,3-diazetidine, 1,3,5-tris-[3-isocyanato-4-methylphenyl]-2,4,6-trioxohexahydro-1,3,5-triazine, 1,3-bis[3-isocyanato-4-methylphenyl]-2,4,5-trioxoimidazolidine, bis[2-isocyanatophenyl]methane,(2-isocyanatophenyl) (4-isocyanatophenyl)methane, bis[4-isocyanatophenyl]methane, 2,4-bis[4-isocyanatobenzyl]-1-isocyanatobenzene, [4-isocyanato-3-(4-isocyanatobenzyl)-phenyl][2-isocyanato-5-(4-isocyanatobenzyl)phenyl]methane, tris[4-isocyanatophenyl]methane, 1,5-bis[isocyanato]-naphthalene and 4,4'-bis[isocyanato]-3,3'-dimethylbiphenyl.

4. Polymers according to Claim 3, **characterized in that** the diisocyanate which forms the bridge group Q is chosen from the group consisting of 1,6-bis[isocyanato]hexane, 5-isocyanato-3-(isocyanatomethyl)-1,1,3-trimethylcyclohexane, 2,4-bis[isocyanato]toluene, 2,6-bis[isocyanato]toluene, 2,4-/2,6-bis[isocyanato]toluene and bis[4-isocyanatophenyl]-methane.

5. Polymers according to Claim 1, **characterized in that** the tertiary phosphine groups in the 1,2-, 1,3-, 1,4- or 1,5-position are bonded to an aliphatic radical having a total of 4 to 12 C atoms, a cycloaliphatic radical having 3 to 8 C atoms, a heterocycloaliphatic radical having 2-6 C atoms in the heterocyclic moiety, an aromatic radical having 6 to 20 C atoms or a heteroaromatic radical having 2 to 12 C atoms in the heterocyclic moiety.

6. Polymers according to Claim 1, **characterized in that** the diphosphine is a compound of the formula Ia or Ib 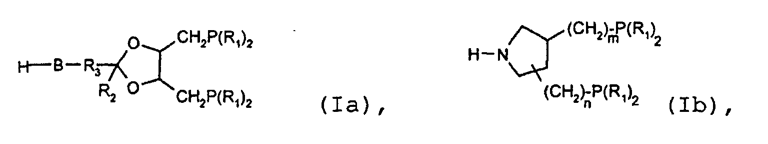 in which
the R₁ are identical or different radicals and independently of one another are C₁-C₁₂alkyl, C₅-C₁₂cycloalkyl, phenyl, C₅-C₁₂cycloalkyl which is substituted by C₁-C₄alkyl or C₁-C₄alkoxy or phenyl which is mono- to trisubstituted by C₁-C₄alkyl, C₁-C₄alkoxy, C₁-C₄halogenalkyl, -SiR₄R₅R₆, halogen, -SO₃M, -CO₂M, -PO₃M, -NR₇R₈ or -[⁺NR₇R₈R₉]X⁻ ;
or the two R₁ of a group (R₁)₂P together are o,o' -diphenylene;
R₂ is hydrogen, linear or branched C₁-C₁₂alkyl, phenyl or benzyl;
R₃ is C₁-C₁₂alkylene;
the groups (R₁)₂P(CH₂)ₘ or n are in the o- or m-position relative to one another;
B is -NR₁₀- or -O-;
R₄, R₅ and R₆ independently of one another are C₁-C₁₂alkyl or phenyl;
R₇ and R₈ are H, C₁-C₁₂alkyl or phenyl, or
R₇ and R₈ together are tetramethylene, pentamethylene or 3-oxa-1,5-pentylene;
R₉ is H or C₁-C₄alkyl;
M is H or an alkali metal;
X⁻ is the anion of a monobasic acid;
R₁₀ is hydrogen or linear or branched C₁-C₆alkyl;
and m and n independently of one another are 0 or 1.

7. Polymers according to Claim 6, **characterized in that** each R₁ in formula Ia or Ib is C₁-C₈alkyl.

8. Polymers according to Claim 6, **characterized in that** cycloalkyl R₁ in formula Ia or Ib contains 5 to 8 ring C atoms.

9. Polymers according to Claim 6, **characterized in that** R₁ in formula Ia or Ib is phenyl, 2-methyl-, 3-methyl-, 4-methyl-, 2- or 4-ethyl-, 2- or 4-i-propyl-, 2- or 4-t-butyl-, 2-methoxy-, 3-methoxy-, 4-methoxy-, 2- or 4-ethoxy-, 4-trimethylsilyl-, 2-or 4-fluoro-, 2,4-difluoro-, 2- or 4-chloro-, 2,4-dichloro-, 2,4-dimethyl-, 3,5-dimethyl-, 2-methoxy-4-methyl-, 3,5-dimethyl-4-methoxy-, 3,5-dimethyl-4-(dimethylamino)-, 2- or 4-amino-, 2- or 4-methylamino-, 2- or 4-(dimethylamino)-, 2- or 4-SO₃H-, 2- or 4-SO₃Na-, 2- or 4-[⁺NH₃Cl⁻]-, 2,4,6-trimethylphen-1-yl or 3,4,5-trimethylphen-1-yl, 4-trifluoromethylphenyl or 3,5-di(trifluoromethyl).

10. Polymers according to Claim 6, **characterized in that** each R₁ in formula Ia or Ib is the same and is phenyl, cyclohexyl, t-butyl, 2- or 4-methylphen-1-yl, 2- or 4-methoxyphen-1-yl, 2- or 4-(dimethylamino)phen-1-yl, 3,5-dimethyl-4-(dimethylamino)phen-1-yl or 3,5-dimethyl-4-methoxyphen-1-yl, 4-trifluoromethylphenyl or 3,5-di(trifluoromethyl).

11. Polymers according to Claim 6, **characterized in that** each R₁ in formula Ia or Ib is phenyl and m+n in formula Ib is 0, 1 or 2.

12. Polymers according to Claim 6, **characterized in that**, in formula Ib, R₁ is phenyl, m is 0 and n is 1 and the groups (R₁)₂P- and (R₁)₂PCH₂- are bonded in the m-position, or m and n are 0 and the groups (R₁)₂P- in the o-position.

13. Polymers according to Claim 6, **characterized in that** the compounds of the formula Ia or Ib are present in the form of the optically active R,R-, S,S-, R,S- or S,R-isomers with respect to the position of the phosphine(methyl) groups.

14. Polymers according to Claim 1, **characterized in that** they are non-crosslinked thermoplastic, crosslinked or structurally crosslinked polymers.

15. Polymers according to Claim 1, **characterized in that** they are essentially non-crosslinked polymer which is soluble in organic solvents, a partly crosslinked swellable polymer or a highly crosslinked porous polymers.

16. Polymers according to Claim 1, **characterized in that** the hydroxyl-, or primary or secondary aminofunctional monomer participates from 1 to 100 mol per cent in the construction of the polymer.

17. Polymers according to Claim 16, **characterized in that** the hydroxyl-, or primary or secondary aminofunctional monomer participates from 5 to 100 mol per cent in the construction of the polymer.

18. Polymers according to Claim 17, **characterized in that** the hydroxyl-, or primary or secondary aminofunctional monomer participates from 10 to 100 mol per cent in the construction of the polymer.

19. Polymers according to Claim 1, **characterized in that** the loading of the polymer with tertiary diphosphine groups in the 1,2-,1,3-,1,4- or 1,5-position is between 5 and 100 mol%, based on the available hydroxyl-, or primary or secondary amino group.

20. Polymers according to Claim 19, **characterized in that** the loading of the polymer with tertiary diphosphine groups in the 1,2-,1,3-,1,4- or 1,5-position is between 5 and 50 mol %, based on the available hydroxyl-, or primary or secondary amino group.

21. Polymers according to Claim 1, **characterized in that** the monomers which form the polymer are chosen from the group consisting of styrene, p-methylstyrene or α-methylstyrene, at least one of which contains a bonded hydroxyl group or primary or secondary amino group as the functional group.

22. Polymers according to Claim 21, **characterized in that** further comonomers of dienes or acrylic derivatives, for example butadiene, acrylonitrile, alkyl methacrylate, butadiene/alkyl acrylate and methacrylate, maleic anhydride or acrylonitrile/methyl acrylate which form random or block copolymers are present.

23. Polymers according to Claim 1, **characterized in that** the monomers which form the polymer are chosen from the group consisting of α,β-unsaturated acids and esters or amides thereof, at least one of which contains a bonded hydroxyl group or primary or secondary amino group as the functional group.

24. Polymers according to Claim 23, **characterized in that** the monomers which form the polymer are chosen from the group consisting of acrylates and C₁-C₄alkyl esters thereof, methacrylates and C₁-C₄alkyl esters thereof, acrylamide and acrylonitrile, at least one of which contains a bonded hydroxyl group or primary or secondary amino group as the functional group.

25. Polymers according to Claim 24, **characterized in that** further olefinically unsaturated monomers which form random or block copolymers are present.

26. Polymers according to Claim 1, **characterized in that** the polymer is formed from monomers which contain vinyl alcohol as a homopolymer or vinyl alcohol as a copolymer with vinyl acetate, stearate, benzoate or maleate, vinylbutyral, allyl phthalate or allylmelamine.

27. Polymers according to Claim 1, **characterized in that** the monomers which form the polymer are phenol and a C₁-C₄aldehyde.

28. Polymers according to Claim 1, **characterized in that** the monomers which form the polymer form a polyepoxide of cyclic C₃-C₆ethers or C₂-C₆alkylene glycols and bisglycidyl ethers.

29. Polymers according to Claim 1, **characterized in that** they are polysaccharides.

30. Polymers according to Claim 29, **characterized in that** the polysaccharides are cellulose, cellulose acetates, propionates or butyrates, cellulose ethers, starch, chitin and chitosan.

31. Polymers according to Claim 1, **characterized in that** the recurring structural elements of at least one monomer MM are a compound of the formula IIa, IIb, IIc or IId 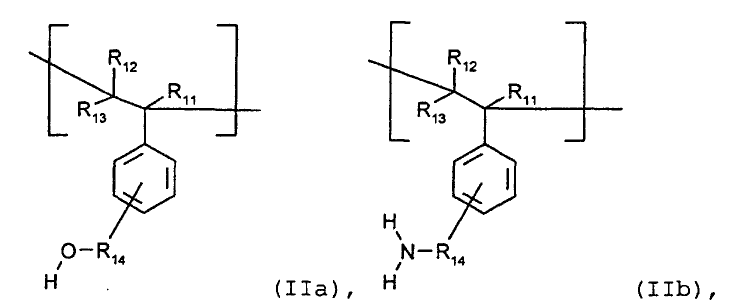 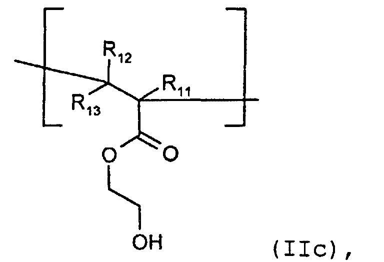 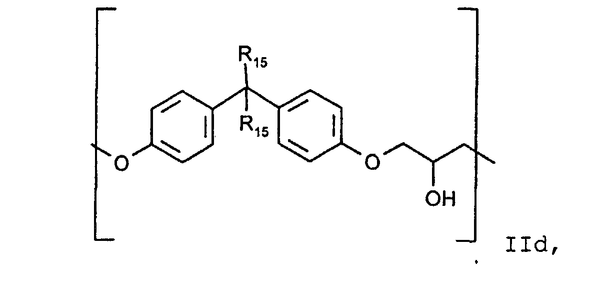 in which R₁₄ is C₁-C₄alkylene and
R₁₁, R₁₂, R₁₃ and R₁₅ independently of one another are hydrogen or C₁-C₄alkyl.

32. Polymers according to Claim 31, **characterized in that** the molecular weight is 2000 to 5 000 000 dalton.

33. Polymers according to Claim 32, **characterized in that** the molecular weight is 10 000 to 1 000 000 dalton.

34. Polymers according to Claim 15, **characterized in that** they are highly crosslinked macroporous polystyrene or polyacrylate.

35. Polymers according to Claim 15, **characterized in that** the particle size of the porous highly crosslinked polymers is 10 µm to 2000 µm.

36. Polymers according to Claim 15, **characterized in that** the specific surface area of the porous highly crosslinked polymers is 5 to 1000 m².

37. Process for the preparation of a polymer according to Claim 1, **characterized in that** it comprises reacting the polymer which is soluble, swellable or insoluble in organic solvents and has recurring structural elements of at least one monomer MM which contains a hydroxyl group or a primary or secondary amino group bonded directly or in a side chain as a functional group,
A) in a first step completely or partly with a diisocyanate which forms a bridge group Q in an inert organic solvent, and in a second step reacting the product completely or partly with an aliphatic, cycloaliphatic, heterocycloaliphatic, aromatic or heteroaromatic ditertiary diphosphine, the phosphine groups of which are bonded with a carbon chain in the 1,2-, 1,3-, 1,4- or 1,5-position relative to one another and which contains a hydroxyl group or a primary or secondary amino group; or
B) in a first step, reacting an aliphatic, cycloaliphatic, heterocycloaliphatic, aromatic or heteroaromatic ditertiary diphosphine, the phosphine groups of which are bonded to a carbon chain in the 1,2-, 1,3-, 1,4- or 1,5-position relative to one another and which contains a hydroxyl group or a primary or secondary amino group, completely or partly with a diisocyanate which forms a bridge group Q in an inert organic solvent and, in a second step, reacting the product completely or partly with a polymer having recurring structural elements of at least one monomer MM which contains a bonded hydroxyl group or a primary or secondary amino group as a functional group; and
C) crosslinking any free isocyanate groups with a C₂-C₂₄diol or C₂-C₂₄diamine or reacting them with a C₂-C₁₂alcohol or C₂-C₁₂amine.

38. Process for the preparation of a crosslinked polymer according to Claim 37, **characterized in that** the polymer having recurring structural elements is obtained if the polymers having recurring structural elements of at least one monomer MM which contains a bonded hydroxyl group or a primary or secondary amino group as functional group
A) are reacted completely or partly, in a first step, with a diisocyanate which forms a bridge group Q in an inert organic solvent and, in a second step, the product is reacted completely or partly with an aliphatic, cycloaliphatic, heterocycloaliphatic, aromatic or heteroaromatic ditertiary diphosphine, the phosphine groups of which are bonded to a carbon chain in the 1,2-, 1,3-, 1,4- or 1,5- position relative to one another and which contains a hydroxyl group or a primary or secondary amino group, and the remaining diisocyanate groups are crosslinked with an aliphatic C₂-C₂₄diol or C₂-C₂₄diamine.

39. Process for the preparation of a polymer according to Claim 37, **characterized in that** a polymer having recurring structural elements of at least one monomer MM which contains a bonded hydroxyl group or primary or secondary amino group as the functional group
A) in a first step is reacted completely or partly with a diisocyanate Q in an inert organic solvent, in a second step the product is reacted partly with an aliphatic, cycloaliphatic, heterocycloaliphatic, aromatic or heteroaromatic 1,2-, 1,3-, 1,4-or 1,5 diphosphine which contains a hydroxyl group or a primary or secondary amino group, and the remaining diisocyanate groups are reacted with an aliphatic C₂-C₁₂alcohol or C₂-C₁₂amine.

40. Process according to Claim 38, **characterized in that** 0.01 to 10 mol per cent of the isocyanate groups present are crosslinked.

41. Process according to Claim 37, **characterized in that** the process is carried out in a polar or nonpolar aprotic solvent.

42. Process according to Claim 41, **characterized in that** the solvent is selected from the group consisting of halogenated hydrocarbon, ester, ketone, acid amide, ether, dimethyl sulphoxide or an aromatic compound.

43. Metal complexes of rhodium or iridium with a polymeric 1,2-, 1,3-, or 1,4-diphosphine according to Claim 1 of the formula IIIa or IIIb,
POL (YMeZ) (IIIa)
POL (YMe)⁺ A⁻ (IIIb),
wherein
POL is a polymer-bonded diphosphine according to Claim 1,
Y is two monoolefin ligands or one diene ligand;
Z is -Cl, -Br, or -I;
Me is rhodium or iridium
and A⁻ is the anion of an oxygen acid or complex acid.

44. Metal complexes according to Claim 43, **characterized in that** Y is 1,5-hexadiene, 1,5-cyclooctadiene or norbornadiene.

45. Metal complexes according to Claim 43, **characterized in that** Z is -Cl or -Br.

46. Metal complexes according to Claim 43, **characterized in that** A⁻ is ClO₄⁻,
CF₃SO₃⁻ , CH₃SO₃⁻, HSO₄⁻, BF₄⁻, B(phenyl)₄⁻ PF₆⁻, SbCl₆⁻, AsF₆⁻ or SbF₆⁻.

47. Metal complexes according to Claim 43, **characterized in that** the diphosphine ligand is a compound of the formula Ia or Ib according to Claim 6.

48. Process for the preparation of metal complexes according to Claim 43, **characterized in that** it comprises reacting compounds according to Claim 1 with a metal compound of the formula [Me(Y)Z]₂ or Me(Y)₂⁺A⁻, in which Me, Y, Z and A⁻ are as defined in Claim 43.

49. Use of metal complexes according to Claim 43 as heterogeneous or homogeneous catalysts for asymmetric hydrogenation of a prochiral compound with carbon or carbon/heteroatom double bond.

50. Use of metal complexes according to Claim 43 for the hydrogenation of unsymmetric carbon double bonds, ketimines and ketones.

51. Process for asymmetric hydrogenation of a compound having a carbon or carbon-heteroatom double bond, **characterized in that** it comprises hydrogenating the compound at a temperature of -20 to 80 °C under a hydrogen pressure of 10⁵ to 2x10⁷ Pa in the presence of a catalytic amount of one or more complexes according to Claim 43.

## Revendications

1. Polymères à éléments de structure récurrents d'au moins un monomère MM, qui contient, sous forme liée en tant que groupement fonctionnel, directement, ou sur une chaîne latérale, un groupement hydroxyle ou un groupement amino primaire ou secondaire, **caractérisés en ce que** le groupement fonctionnel est lié, par l'intermédiaire d'un groupement de pontage Q formé à partir d'un diisocyanate, au groupement hydroxyle ou au groupement amino primaire ou secondaire d'une diphosphine ditertiaire aliphatique, cycloaliphatique, hétérocycloaliphatique, aromatique ou hétéroaromatique, dont les groupements phosphine sont liés les uns aux autres à l'aide d'une chaîne carbonée en position 1,2-, 1,3-, 1,4- ou 1,5-.

2. Polymères selon la revendication 1, **caractérisés en ce que** Q est un radical alkyle en C₂-C₂₀ aliphatique, linéaire ou ramifié, non substitué ou substitué une ou plusieurs fois par un radical alkyle en C₁-C₆, un radical alkoxy en C₁-C₆, un radical cycloalkyle ou hétérocycloalkyle en C₃-C₈, non substitué ou substitué une fois ou plusieurs fois par un radical alkyle en C₁-C₆, un radical alkoxy en C₁-C₆, un radical aliphatique en C₂-C₂₀, non substitué ou substitué par un radical alkyle en C₁-C₆, un radical alkoxy en C₁-C₆, linéaire ou ramifié, interrompu par un radical cycloalkyle ou hétérocycloalkyle en C₃-C₆, non substitué ou substitué par un radical alkyle en C₁-C₆, un radical alkoxy en C₁-C₆, un radical phényle, naphtyle, biphényle ou hétéroaryle en C₃-C₁₀, non substitué ou substitué une ou plusieurs fois par un radical alkyle en C₁-C₆, un radical alkoxy en C₁-C₆, un radical alkyle aliphatique en C₂-C₂₀, non substitué ou substitué par un radical en C₁-C₆, un radical alkoxy en C₁-C₆, linéaire ou ramifié, interrompu par un radical phényle, naphtyle ou hétéroaryle en C₃-C₁₀.

3. Polymères selon la revendication 1, **caractérisés en ce que** le diisocyanate formant le groupement de pontage Q est sélectionné parmi le groupe se composant du 1,6-bis-[isocyanato]-hexane, du 5-isocyanato-3-(isocyanatométhyl)-1,1,3-triméthylcyclohexane, de la 1,3-bis-[5-isocyanato-1,3,3-triméthyl-phényl]-2,4-dioxo-1,3-diazétidine, du 3,6-bis-[9-isocyanato-nonyl]-4,5-di-(1-heptényl)-cyclohexène, du bis-[4-isocyanato-cyclohexyl]-méthane, du trans-1,4-bis-[isocyanato]-cyclohoxane, du 1,3-bis-[isocyanato-méthyl]-benzène, du 1,3-bis-[1-isocyanato-1-méthyl-éthyl]-benzène), du 1,4-bis-[2-isocyanato-éthyl]-cyclohexane, du 1,3-bis[isocyanato-méthyl]-cyclohexane, du 1,4-bis[1-isocyanato-1-méthyl-éthyl]-benzène, du bis-[isocyanato]-isododécylbenzène, du 1,4-bis-[isocyanato]-benzène, du 2,4-bis-[isocyanato]-toluène, du 2,6-bis-[isocyanato]-toluène, du 2,4-/2,6-bis-[isocyanato]-toluène, du 2-éthyl-1,2,3-tris-[3-isocyanato-4-méthylanilinocarbonyloxy]-propane, du N,N'-bis-[3-isocyanato-4-méthyl-phényl]-urée, de la 1,4-bis-[3-isocyanato-4-méthylphényl]-2,4-dioxo-1,3-diazétidine, de la 1,3,5-tris-(3-isocyanato-4-méthylphényl]-2,4,6-trioxo-hexahydro-1,3,5-triazine, de la 1,3-bis-[3-isocyanato-4-méthyl-phényl]-2,4,5-trioxoimidazolidine, du bis-[2-isocyanato-phényl]-méthane, du (2-isocyanato-phényl)-(4-isocyanato-phényl)-méthane, du bis-[4-isocyanato-phényl]-méthane, du 2,4-bis-[4-isocyanato-benzyl]-1-isocyanato-benzène, du [4-isocyanato-3-(4-isocyanato-benzyl)-phényl]-[2-isocyanato-5-(4-isocyanato-benzyl)-phényl)]-méthane, du tris-[4-isocyanato-phényl]-méthane, du 1,5-bis-[isocyanato]-napthalène, du 4,4'-bis-[isocyanato]-3,3'-diméthylbiphényle.

4. Polymères selon la revendication 3, **caractérisés en ce que** le diisocyanate formant le groupement de pontage Q est sélectionné parmi le groupe se composant du 1,6-bis-[isocyanato]-hexane, du 5-isocyanato-3-(isocyanatométhyl)-1,1,3-triméthylcyclohexane, du 2,4-bis-[isocyanato]-toluène, du 2,6-bis-[isocyanato]-toluène, du 2,4-/2,6-bis-[isocyanato]-toluène, du bis-[4-isocyanato-phényl]-méthane.

5. Polymères selon la revendication 1, **caractérisés en ce que** les groupements de phosphine tertiaires en positions 1,2-, 1,3-, 1,4- ou 1,5- sont liés dans l'hétérocycle à un radical aliphatique ayant, en tout, de 4 à 12 atomes de C, à un radical cycloaliphatique ayant de 3 à 8 atomes de C, à un radical hétérocycloaliphatique ayant 2-6 atomes de C dans l'hétérocycle, à un radical aromatique ayant de 6 à 20 atomes de C, ou à un radical hétéroaromatique ayant de 2 à 12 atomes de C.

6. Polymères selon la revendication 1, **caractérisés en ce que** la diphosphine est un composé de formule Ia ou Ib 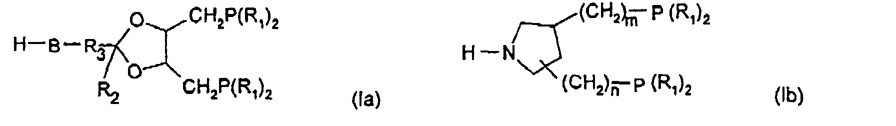 dans lesquelles
les R₁ représentent des radicaux identiques ou différents et désignent, indépendamment les uns des autres, un radical alkyle en C₁-C_{12,} un radical cycloalkyle en C₅-C₁₂, un radical phényle, un radical cycloalkyle en C₅-C₁₂ substitué par un radical alkyle en C₁-C₄ ou par un radical alkoxy en C₁-C₄ ou un radical phényle, substitué par de un à trois radicaux alkyle en C₁-C₄, alkoxy en C₁-C₄, halogénoalkyle en C₁-C₄, -SiR₄R₅R₆, halogène, -SO₃M, -CO₂M, -PO₃M, -NR₇R₈ ou -[⁺NR₇R₅R₉]X⁻ ;
ou les deux R₁ d'un groupe (R₁)₂P représentent le diphénylène-o,o' ;
R₂ désigne l'hydrogène, un radical alkyle en C₁-C₁₂, linéaire ou ramifié, un radical phényle ou un radical benzyle ;
R₃ représente un alkylène en C₁-C₁₂ ;
les groupements (R₁)₂P(CH₂)_{m ou n} sont en position o ou m les uns par rapport aux autres ;
B désigne -NR₁₀ ou -O- ;
R₄, R₅ et R₆ représentent, indépendamment les uns des autres, un radical alkyle en C₁-C₁₂ ou un radical phényle ;
R₇ et R₆ désignent H, un radical alkyle en C₁-C₁₂, un radical phényle ou
R₇ et R₈ représentent ensemble le tétraméthylène, le pentaméthylène ou le 3-oxa-1,5-pentylène;
R₉ désigne H ou un radical en C₁-C₄,
M désigne H ou un métal alcalin, X⁻ est l'anion d'un monoacide ;
R₁₀ désigne l'hydrogène, un radical alkyle, linéaire ou ramifié, en C₁-C₆ et m et n désignent, indépendamment l'un de l'autre, 0 ou 1.

7. Polymères selon la revendication 6, **caractérisés en ce que** les R₁ dans la formule Ia ou Ib représentent un radical alkyle en C₁-C₈.

8. Polymères selon la revendication 6, **caractérisés en ce que** les R₁ dans la formule Ia ou Ib contiennent, en tant que radical cycloalkyle, de 5 à 8 atomes de C de cycle.

9. Polymères selon la revendication 6, **caractérisés en ce que** le R₁ dans la formule Ia ou Ib représente un radical phényle, un radical phényle à substituants 2-méthyl-, 3-méthyl-, 4-méthyl-, 2- ou 4-éthyl-, 2 ou 4-i-propyl-, 2- ou 4-t-butyl-, 2-méthoxy-, 3-méthoxy, 4-méthoxy, 2- ou 4-éthoxy, 4-triméthylsilyl-, 2- ou 4-fluor, 2,4-difluoro, 2- ou 4-chloro-, 2,4-dichloro, 2,4-diméthyl-, 3,5-diméthyl-, 2-méthoxy-4-méthyl-, 3,5-diméthyl-4-méthoxy, 3-5-diméthyl-4-(diméthylamino)-, 2 ou 4-amino-, 2- ou 4-méthylamino, 2- ou 4-(diméthylamino), 2- ou 4-SO₃H-, 2 ou 4-SO₃Na-, 2 ou 4-[⁺NH₃Cl⁻]-, 2,4,6-triméthylphén-1-yl ou 3,4,5-triméthylphén-1-yl, 4-trifluorométhyl-phényl ou 3,5-di(trifluorométhyl).

10. Polymères selon la revendication 6, **caractérisés en ce que** les R₁ dans la formule la ou Ib représentent des radicaux identiques et désignent les radicaux phényle, cyclohexyle, t-butyle, 2- ou 4-méthylphén-1-yle, 2- ou 4-méthoxyphén-1-yle, 2- ou 4-(diméthylamino)phén-1-yle, 3,5-diméthyl-4-(diméthyl-amino)phén-1-yle ou 3,5-diméthyl-4-méthoxy-phén-1-yle, 4-trifluoro-méthylphényle ou 3,5-di(trifluorométhyle).

11. Polymères selon la revendication 6, **caractérisés en ce que** les R₁ dans la formule Ia ou Ib sont des radicaux phényle et **en ce que** m+n dans la formule Ib sont 0, 1 ou 2.

12. Polymères selon la revendication 6, **caractérisés en ce que**, dans la formule Ib, R₁ désigne le radical phényle, m représente 0 et n représente 1, et les groupements (R₁)₂P- et (R₁)₂PCH₂- sont liées en position m, ou m et n désignent 0 et les groupements (R₁)₂P sont liées en position o.

13. Polymères selon la revendication 6, **caractérisés en ce que** les composés de la formule Ia ou lb sont présents sous la forme de leurs isomères optiquement actifs R,R-, S,S-, R,S- ou S,R-, par rapport à la position des groupements phosphine(méthyle).

14. Polymères selon la revendication 1, **caractérisés en ce qu'**il s'agit de polymères non réticulés thermoplastiques, réticulés ou réticulés à structure.

15. Polymères selon la revendication 1, **caractérisés en ce qu'**il s'agit pour l'essentiel de polymères pour l'essentiel non réticulés, solubles dans des solvants organiques, de polymères partiellement réticulés, gonflables ou de polymères poreux, fortement réticulés.

16. Polymères selon la revendication 1, **caractérisés en ce que** le monomère à fonction hydroxyle, amine primaire ou secondaire contribue à la formation du polymère à raison de 1 à 100 % en moles.

17. Polymères selon la revendication 16, **caractérisés en ce que** le monomère à fonction hydroxyle, amine primaire ou secondaire contribue à la formation du polymère à raison de 5 à 100 % en moles.

18. Polymères selon la revendication 17, **caractérisés en ce que** le monomère à fonction hydroxyle, amine primaire ou secondaire contribue à la formation du polymère à raison de 10 à 100 % en moles.

19. Polymères selon la revendication 1, **caractérisés en ce que** le chargement du polymère avec les groupements de diphosphine tertiaires en position 1,2-, 1,3-, 1,4-ou 1,5-, est compris entre 5 et 100 % en moles, par rapport aux groupements disponibles hydroxyle, amino primaire et secondaire.

20. Polymères selon la revendication 19, **caractérisés en ce que** le chargement du polymère avec les groupements de diphosphine tertiaires en position 1,2-, 1,3-, 1,4- ou 1,5-, est compris entre 5 et 50 % en moles, par rapport aux groupements disponibles hydroxyle, amino primaire et secondaire.

21. Polymères selon la revendication 1, **caractérisés en ce que** les monomères formant le polymère sont sélectionnés parmi le groupe se composant du styrène, du p-méthylstyrène ou de l'α-méthylstyrène, dont au moins un contient, sous forme liée en tant que groupement fonctionnel, un groupement hydroxyle ou un groupement amino primaire ou secondaire.

22. Polymères selon la revendication 21, **caractérisés en ce que** sont présents des comonomères supplémentaires de diènes ou de dérivés acryliques, comme, par exemple le butadiène, l'acrylonitrile, le méthacrylate d'alkyle, l'acrylate ou le méthacrylate de butadiènealkyle, l'anhydride maléique, le méthacrylate d'acrylonitrile, qui forment des copolymères statistiques ou séquencés.

23. Polymères selon la revendication 1, **caractérisés en ce que** les monomères formant, le polymère sont sélectionnés du groupe se composant d'acides insaturés en α,β, de leurs esters ou de leurs amides, dont au moins un contient, sous forme liée, en tant que groupement fonctionnel, un groupement hydroxyle ou un groupement amino primaire ou secondaire.

24. Polymères selon la revendication 23, **caractérisés en ce que** les monomères formant le polymère sont sélectionnés du groupe se composant d'acrylates et de leurs esters alkyles en C₁-C₄, de méthacrylates et de leurs esters alkyles en C₁-C₄, d'acrylamide et d'acrylonitrile, dont au moins un contient, sous forme liée, en tant que groupement fonctionnel, un groupement hydroxyle ou un groupement amino primaire ou secondaire.

25. Polymères selon la revendication 24, **caractérisés en ce que** sont présents des monomères à insaturation oléfinique supplémentaires, qui forment des copolymères statistiques ou séquencés.

26. Polymères selon la revendication 1, **caractérisés en ce que** le polymère est formé de monomères, qui contiennent l'alcool vinylique en tant qu'homopolymère ou l'alcool vinylique en tant que copolymère avec l'acétate, le stéarate, le benzoate, le maléate de vinyle, le butyral de vinyle, le phtalate d'allyle, le mélamine d'allyle.

27. polymères selon la revendication 1, **caractérisés en ce que** les monomères formant le polymère sont le phénol et un aldéhyde en C₁-C₄.

28. Polymères selon la revendication 1, **caractérisés en ce que** les monomères, formant le polymère forment un polyépoxyde à partir d'éthers cycliques en C₃-C₆ ou d'alkylèneglycols en C₂-C₆ et d'éthers bis-glycidiques.

29. Polymères selon la revendication 1, **caractérisés en ce qu'**ils sont des polysaccharides.

30. Polymères selon la revendication 29, **caractérisés en ce que** les polysaccharides sont la cellulose, l'acétate, le propionate ou le butyrate de cellulose, l'éther de cellulose, des amidons, la chitine et le chitosan.

31. Polymères selon la revendication 1, **caractérisés en ce que** les éléments de structure récurrents d'au moins un monomère MM représentent un composé des formules IIa, IIb, IIc ou IId 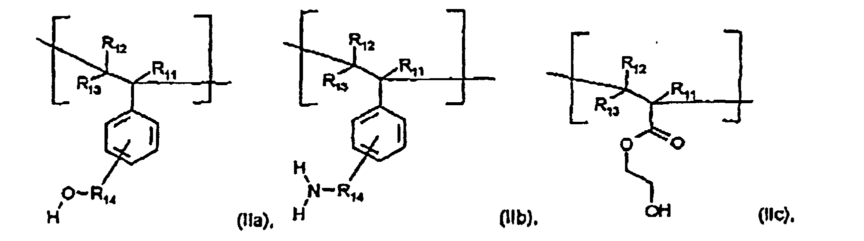 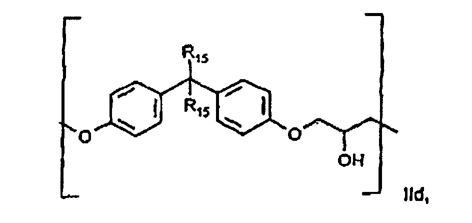 dans lesquelles R₁₄ est un alkylène en C₁-C₄ et
R₁₁, R₁₂, R₁₃ et R₁₅ sont, indépendamment l'un de l'autre, l'hydrogène ou un radical alkyle en C₁-C₄.

32. Polymères selon la revendication 31, **caractérisés en ce que** le poids moléculaire est de 2 000 à 5 000 000 daltons.

33. Polymères selon la revendication 32, **caractérisés en ce que** le poids moléculaire est de 10 000 à 1 000 000 daltons.

34. Polymères selon la revendication 15, **caractérisés en ce qu'**il s'agit d'un polystyrène ou d'un polyacrylate fortement réticulé à macroporosité.

35. Polymères selon la revendication 15, **caractérisés en ce que** la grosseur des particules du polymère poreux fortement réticulé est de 10 µm à 2 000 µm.

36. Polymères selon la revendication 15, **caractérisés en ce que** la surface spécifique des polymères poreux fortement réticulés présente une valeur de 5 à 1 000 m².

37. Procédé pour la préparation du polymère selon la revendication 1, **caractérisé en ce que** l'on fait réagir, partiellement ou totalement, dans un solvant organique inerte, les polymères solubles dans des solvants organiques, gonflables ou insolubles, à éléments de structure récurrents, d'au moins un monomère MM, qui contient, sous forme liée en tant que groupement fonctionnel, directement ou dans une chaîne latérale, un groupement hydroxyle ou un groupement amino primaire ou secondaire,
A) dans une première étape avec un diisocyanate formant un groupement de pontage Q et **en ce que** l'on fait réagir le produit, entièrement ou partiellement, dans une deuxième étape, avec une diphosphine ditertiaire aliphatique, cycloaliphatique, hétérocycloaliphatique, aromatique ou hétéroaromatique, dont les groupements phosphine sont liés les uns aux autres avec une chaîne carbonée en position 1,2-, 1,3-, 1,4- ou 1,5-, et qui contient un groupement hydroxyle ou un groupement amino primaire ou secondaire; ou
B) **en ce que** l'on fait réagir, dans un solvant organique inerte, dans une première étape, une diphosphine ditertiaire aliphatique, cycloaliphatique, hétérocycloaliphatique, aromatique ou hétéroaromatique, dont les groupements phosphine sont liés les uns aux autres avec une chaîne carbonée en position 1,2-, 1,3-, 1,4-, ou 1,5- et qui contient un groupement hydroxyle ou un groupement amino primaire ou secondaire, entièrement ou partiellement, avec un diisocyanate formant un groupement de pontage Q et **en ce que** l'on fait réagir le produit, dans une deuxième étape, avec un polymère, à éléments de structure récurrents, d'au moins un monomère MM, qui contient, sous forme liée en tant que groupement fonctionnel, un groupement hydroxyle ou un groupement amino primaire ou secondaire; et
C) le cas échéant, **en ce que** l'on procède à la réticulation des groupements isocyanates encore libres avec un diol en C₂-C₂₄ ou avec une diamine en C₂-C₂₄ ou **en ce que** l'on fait réagir ces derniers avec un alcool en C₂-C₁₂ ou une amine en C₂-C₁₂.

38. Procédé pour la préparation de polymères réticulés selon la revendication 37, **caractérisé en ce que** l'on fait réagir, partiellement ou totalement, dans un solvant organique inerte, les polymères à éléments de structure récurrents d'au moins un monomère MM, qui contient, sous forme liée en tant que groupement fonctionnel, un groupement hydroxyle ou un groupement amino primaire ou secondaire,
A) dans une première étape, avec un diisocyanate formant un groupement de pontage Q et **en ce que** l'on fait réagir le produit, entièrement ou partiellement, dans une deuxième étape, avec une disphosphine ditertiaire aliphatique, cycloaliphatique, hétérocycloaliphatique, aromatique ou hétéroaromatique, dont les groupements phosphine sont liés les uns aux autres avec une chaîne carbonée en position 1,2-, 1,3-, 1,4-, ou 1,5-, et qui contient un groupement hydroxyle ou un groupement amino primaire ou secondaire, et que l'on procède à la réticulation des groupements de diisocyanates restants à l'aide d'un diol en C₂-C₂₄ aliphatique ou d'une diamine en C₂-C₂₄.

39. Procédé pour la préparation de polymères selon la revendication 37, **caractérisé en ce que** l'on fait réagir, entièrement ou partiellement, dans un solvant organique inerte, les polymères à éléments de structure récurrents d'au moins un monomère MM, qui contient, sous forme liée en tant que groupement fonctionnel, un groupement hydroxyle ou un groupement amino primaire ou secondaire,
A) dans une première étape, avec un diisocyanate Q, **en ce que** l'on fait réagir, entièrement ou partiellement, le produit, dans une deuxième étape, avec une diphosphine aliphatique, cycloaliphatique, hétérocycloaliphatique, aromatique ou hétéro-aromatique 1,2-, 1,3-, 1,4- ou 1,5-, qui contient un groupement hydroxyle ou un groupement amino primaire ou secondaire, et **en ce que** l'on laisse réagir les groupements de diisocyanates restants avec un alcool en C₂-C₁₂ aliphatique ou avec une amine en C₂-C₁₂.

40. Procédé selon la revendication 38, **caractérisé en ce que** l'on procède à la réticulation de 0,01 à 10 % en moles des groupements isocyanates présents.

41. Procédé selon la revendication 37, **caractérisé en ce que** le procédé est effectué dans un solvant aprotique polaire ou non polaire.

42. Procédé selon la revendication 41, **caractérisé en ce que** le solvant est sélectionné parmi le groupe se composant d'un hydrocarbure halogéné, d'un ester, d'une cétone, d'un amide, d'un éther, du diméthylsulfoxyde ou d'un composé aromatique.

43. Complexe métallique du rhodium ou de l'iridium avec des diphosphines polymères 1,2-, 1,3-, ou 1,4-, selon la revendication 1 de formule IIIa ou IIIb
POL(YMeZ) (IIIa)
POL(YMe)⁺A⁻ (IIIb),
POL désignant une diphosphine lié au polymère selon la revendication 1,
Y représentant deux ligands de mono-oléfines ou un ligand de diène ;
Z désignant -Cl, -Br ou -I ;
Me représentant le rhodium ou l'iridium.

44. Complexes métalliques selon la revendication 43, **caractérisés en ce que** Y représente le 1,5-hexadiène, le 1,5-cyclo-octadiène ou le norbornadiène.

45. Complexes métalliques selon la revendication 43, **caractérisés en ce que** Z représente -Cl ou -Br.

46. Complexes métalliques selon la revendication 43, **caractérisé en ce que** A⁻ représente ClO₄⁻, CF₃SO₂⁺, CH₂SO₄⁻, HSO₄⁻, BF₄⁺, B(phényl)₄, PF₄, SbCl₆⁻, AsF₆⁻ ou SbF₆.

47. Complexes métalliques selon la revendication 43, **caractérisés en ce que** le ligand de la diphosphine est un composé de la formule 1a ou 1b selon la revendication 6.

48. Procédé de préparation de complexes métalliques selon la revendication 43, **caractérisé en ce que** l'on fait réagir des composés selon la revendication 1 avec un composé métallique de la formule [Me(Y)Z]₂ ou Me(Y)₂*A⁻, Me, Y, Z et A⁻ ayant les significations indiquées dans la revendication 43.

49. Utilisation de complexes métalliques selon la revendication 43, en tant que catalyseurs hétérogènes ou homogènes, en vue de l'hydrogénation asymétrique de composés prochiraux, ayant des liaisons doubles carbone ou carbone/hétéroatomes.

50. Utilisation de complexes métalliques selon la revendication 43, en vue de l'hydrogénation de liaisons doubles de carbone non symétriques, de cétimines et de cétones.

51. Procédé en vue de l'hydrogénation asymétrique de composés ayant des liaisons doubles carbone ou carbone/hétéroatomes, **caractérisé en ce que** l'on procède à l'hydrogénation des composés à une température de -20 à 80°C et à une pression d'hydrogène de 10³ à 2 x 10⁷ Pa, en présence de quantités catalytiques d'un ou de plusieurs complexes selon la revendication 43.
